# EUROPÄISCHE PATENTSCHRIFT

(11) **EP 3 661 747 B1**
(45) Veröffentlichungstag und Bekanntmachung des Hinweises auf die Patenterteilung: **11.05.2022**
(21) Anmeldenummer: 18758548.4
(22) Anmeldetag: 03.08.2018
(51) Int. Cl.: B32B 37/10, B29C 65/48, B32B 37/12, C09J 175/00, C08K 3/011

(54) **VERFAHREN ZUM VERKLEBEN VON GUMMI UND KLEBSTOFF ZUM VERKLEBEN VON GUMMI**
METHOD FOR BONDING RUBBER, AND ADHESIVE FOR BONDING RUBBER
PROCÉDÉ POUR LE COLLAGE DE GOMME ET ADHÉSIF POUR LE COLLAGE DE GOMME

(30) Priorität: 03.08.2017 DE 102017007248
(43) Veröffentlichungstag der Anmeldung: 10.06.2020
(73) Patentinhaber: Hejatex GmbH, 94315 Straubing (DE)
(72) Erfinder: JAKOB, Edgar, 94315 Straubing (DE)
(74) Vertreter: Hannke Bittner & Partner
(86) Internationale Anmeldenummer: PCT/EP2018/071100
(87) Internationale Veröffentlichungsnummer: WO 2019/025578

(56) Entgegenhaltungen:
- WO-A1-2014/039043
- DE-A1- 10 200 277
- DE-A1- 19 733 643
- DE-A1-102012 023 181
- US-A- 3 935 135

## Beschreibung

Die Erfindung betrifft ein Verfahren zum hochfesten und dauerelastischen Verkleben von Oberflächen miteinander, wobei es sich bei mindestens einer Oberfläche um eine Oberfläche eines dauerelastischen Kunststoffs handelt, mit Hilfe eines Klebstoffes. Weiterhin betrifft die Erfindung einen entsprechenden Klebstoff.

Aus dem Stand der Technik sind Kaltklebeverfahren zum Verbinden von Gummi bekannt. Dabei ist entscheidend, dass die Verbindung sowohl hochfest, aber auch dauerelastisch ausgebildet ist, um bei einer elastischen Verformung des Gummis nicht zu brechen.

Für eine Klebeverbindung zwischen Gummioberflächen im Kaltklebeverfahren werden verschiedene Klebstoffe eingesetzt. Häufig werden Klebstoffe auf Basis von Polychloropren, einem Synthese-Kautschuk, verwendet. Polychloropren-Klebstoffe enthalten in Lösungsmittel gelöste Chloropren-Polymere und gehören zur Klasse der Kontaktklebstoffe. Bei Kontaktklebstoffen beginnt die Verfestigung nach dem Aufbringen ohne Wärmeeinwirkung durch Verdunsten des Lösungsmittels. Erst nachdem das Lösungsmittel größtenteils verdunstet ist, werden die zu verklebenden Oberflächen unter hohem Anpressdruck in Kontakt gebracht und es kommt zur Ausbildung kristalliner Strukturen aus den Chloropren-Polymeren. Eine Kohäsion beziehungsweise Adhäsion innerhalb des Klebstoffs beziehungsweise zwischen dem Klebstoff und den zu verklebenden Oberflächen beruht auf molekularen Wechselwirkungen, wie van-der-Waals-Wechselwirkungen, und mechanischem Zusammenhalt durch Diffusion von Polymermolekülen in die zu verklebenden Oberflächen. Die Lösungsmittel, die im Laufe der Verfestigung des Klebstoffes verdunsten, stellen ein vermehrt auftretendes Problem dar. In den meisten Fällen kommen leichtflüchtige organische Lösungsmittel zum Einsatz, die für einen Anwender gesundheitliche Risiken, beispielsweise Benommenheit, Übelkeit, Kopfschmerzen, Schleimhautreizung bis hin zu Organschäden und Krebserzeugung, bergen können. Insbesondere bei Verklebungen in schlecht belüfteter Umgebung, beispielsweise von Transportbändern unter Tage, scheiden derartige Verklebungstechniken daher aus. Da es sich bei Kontaktklebstoffen um Thermoplasten handelt, ist deren Einsatz für Verklebungen, die eine gewisse Wärmefestigkeit und oder einen breiten Einsatztemperaturbereich erfordern, eingeschränkt.

Eine weitere Klebstoff-Klasse, die zum Verkleben von Gummioberflächen mit einer anderen Oberfläche eingesetzt werden, stellen Reaktionsklebstoffe dar. Reaktionsklebstoffe enthalten Monomere oder kürzere Polymerketten, die durch eine chemische Reaktion zu langkettigen Polymeren verknüpft werden und sich dadurch verfestigen. In Bezug auf die chemische Reaktion sind unter anderem Polyadditions-, Polykondensations- oder Kettenpolymerisationsmechanismen bekannt. Eine Reaktion kann thermisch, photolytisch, mit Luftsauerstoff und/oder Luftfeuchtigkeit oder durch einfaches Vermischen der Komponenten eingeleitet werden. Grundsätzlich unterscheidet man bei Reaktionsklebstoffen zwischen 1-Komponentenklebstoffen und 2-Komponentenklebstoffen, wobei die entsprechende Ausführung von den verwendeten Monomeren und der Art der chemischen Reaktion bestimmt wird. Bei 2-Komponentenklebstoffen wird vor der Anwendung eine Mischung hergestellt. Die Kohäsion und Adhäsion findet durch chemische Bindung und molekulare Wechselwirkungen statt. Reaktionsklebstoffe weisen, bedingt durch die chemische Reaktion, eine Topfzeit auf. Innerhalb der Topfzeit kann der Reaktionsklebstoff verarbeitet werden, nach überschreiten der Topfzeit ist die Viskosität der Mischung so hoch, dass die zu verklebenden Oberflächen nicht mehr benetzt werden können. Eine Schwierigkeit bei 2-Komponentenklebstoffen stellt ein Einhalten des Mischungsverhältnisses und eine gleichmäßige Durchmischung dar, die für eine hochfeste und dauerelastische Verklebung entscheidend sind. Reaktionsklebstoffe enthalten häufig leichtflüchtige Lösungsmittel, in denen die Monomere oder die kürzeren Polymerketten gelöst sind. Diese Lösungsmittel verdunsten im Laufe der Anwendung und werden zum Risiko für den Anwender. Wie bereits oben hinsichtlich der Kontaktklebstoffe dargestellt, scheiden derartige Kleber in schlecht belüfteter Umgebung, beispielsweise von Transportbändern unter Tage, aufgrund des Lösungsmittels aus.

Aus dem Stand der Technik sind weiterhin Heißverfahren zum Verbinden von Gummioberflächen bekannt, dies umfasst die Vulkanisation. Bei diesem Verfahren kommen Vulkanisierlösungen zum Einsatz, die unter anderem gelöste Kautschukmischungen, verschiedene Lösungsmittel, Vernetzungschemikalien, wie Schwefel, Peroxide oder Metalloxide und Vulkanisationsbeschleuniger, wie Zinkoxid, 2-Mercaptobenzothiazol oder Dithiocarbamate enthalten. Die Vulkanisierlösung wird auf den zu verbindenden Gummioberflächen aufgetragen und mit einer Vulkanisationspresse bei hohem Druck und hoher Temperatur für zum Teil mehrere Stunden verpresst. Die dabei eintretende chemische Reaktion von Kautschukmolekülen mit den Vernetzungschemikalien, im Fall von Schwefel unter Ausbildung von Schwefelbrücken, führt zur Vernetzung der Kautschukmoleküle. Die Vulkanisation umfasst den Einsatz von leichtflüchtigen und gesundheitsschädlichen Lösungsmitteln, wie Trichlorethen, und zum Teil toxischer Vulkanisationsbeschleuniger. Weiterhin erfordert die Vulkanisation einen hohen technischen Aufwand und fachmännisches Wissen. Insbesondere in entlegenen und/oder schlecht zugänglichen Gebieten wie Minen (insbesondere unter Tage) stehen diese Materialien und das benötigte technische Gerät, wie z.B. Vulkanisierpressen (insbesondere explosionsgeschützten Vulkanisierpressen), oft nicht zur Verfügung, so dass beispielsweise bei der Beschädigung von Transportbändern lange Stillstandszeiten entstehen und mit herkömmlichen Methoden auch nicht vermieden werden können.

US 3 935 135 A beschreibt einen Klebstoff, der 0,5 - 30 Gew.-% Ethylen-Vinylacetat-Mischpolymerisat, 0,5 - 30 Gew.-% eines chlorierten Polyethylens, Polypropylens, Naturkautschuks oder Polyisoprens, 0,5 - 30 Gew.-% eines alkylierten Polyphenylsulfons, 0,1 - 24 Gew.-% einer aromatischen Polynitroso-Verbindung und 30 - 90 Gew.-% mindestens eines organischen Lösungsmittels enthält. Dieser Klebstoff wird bevorzugt zum Verkleben von Kunststoff, Metall, Porzellan oder Gummi verwendet und insbesondere zum Verkleben von Metallen mit Kautschuk-Vulkanisaten.

Aus dem Stand der Technik sind ebenfalls DE 102 00 277 A1, WO 2014/039043 A1, DE 10 2012 023181 A1 und DE 197 33 643 A1 bekannt, die jeweils einen etwaigen Klebstoff zeigen.

Die Aufgabe der vorliegenden Erfindung ist es, ein Verfahren zum hochfesten und dauerelastischen Verkleben von mindestens zwei Oberflächen miteinander, wovon mindestens eine Oberfläche Gummi umfasst, mittels eines Klebstoffes, bereitzustellen, das die oben genannten Nachteile nicht aufweist oder zumindest minimiert. Vorzugsweise soll das Verfahren schnell, ohne großen apparativen Aufwand, möglichst unabhängig von Versorgungsnetzen wie Strom und/oder Wasser, und in schlecht gelüfteten Bereichen - möglichst ohne gesundheitliche Belastung des ausführenden Personals - durchführbar sein. Bevorzugt sollte aus letzterem Grund auf die Verwendung von gesundheitsschädlichen Substanzen verzichtet werden können und kein großer technischer Aufwand nötig sein. Außerdem ist es Aufgabe der Erfindung einen Klebstoff für das erfindungsgemäße Verfahren bereitzustellen.

Gelöst wird diese Aufgabe durch ein Verfahren zum hochfesten und dauerelastischen Verkleben von mindestens zwei Oberflächen miteinander, wovon mindestens eine Oberfläche eine Oberfläche eines dauerelastischen Kunststoffs ist, gemäß Anspruch 1 sowie durch einen Klebstoff gemäß Anspruch 8.

Ein wesentlicher Aspekt der Erfindung ist ein Verfahren gemäß Patentanspruch 1 zum hochfesten und dauerelastischen Verkleben von mindestens zwei Oberflächen miteinander, wovon mindestens eine Oberfläche eine Oberfläche eines dauerelastischen Kunststoffs ist, mittels eines eine Polyurethankomponente umfassenden Klebstoffes umfassend die Schritte:
a) Aufbringen des Klebstoffs auf mindestens eine erste der zu verbindenden Oberflächen,
b) Sicherstellen von Bedingungen, unter denen mindestens ein erster Verfestigungsmechanismus des Klebstoffs abläuft, welcher mindestens eine chemische Reaktion unter Ausbildung einer mindestens ein Schwefelatom einschließenden chemischen Bindung umfasst,
c) In Kontakt bringen der mit dem Klebstoff versehenen ersten Oberfläche mit der optional ebenfalls mit dem Klebstoff versehenen zweiten Oberfläche,
d) Sicherstellen von Bedingungen, unter denen mindestens ein zweiter Verfestigungsmechanismus des Klebstoffs abläuft, welcher mindestens die Ausbildung kristalliner Strukturen aus amorphen Polymeren umfasst.

Unter einem hochfesten Verkleben ist hierbei jegliches Verkleben zu verstehen, das mindestens zwei Oberflächen, wovon mindestens eine Oberfläche eine Oberfläche eines dauerelastischen Kunststoffs ist, verklebt und die Oberflächen derart dauerhaft miteinander verbindet, dass sie nur schwer und bevorzugt gar nicht mehr (zumindest nicht zerstörungsfrei) voneinander getrennt werden können. Dadurch ist eine hohe Belastung und Beanspruchung der verklebten Oberflächen bei gleichzeitiger Reduzierung der Gefahr, dass die Oberflächen bei hoher Krafteinwirkung wieder getrennt werden, möglich.

Bevorzugt erfolgt durchläuft der Kleber während Schritt d) einen sogenannten B-Stage. Dies eine besonders lange Verarbeitungszeit, vor der die zu verklebenden Oberflächen zusammengefügt werden müssen. Darüber hinaus lässt sich eine besonders hohe Anfangshaftung erreichen.

Bevorzugt diffundiert ein Teil des Klebers während der Schritte a) und/oder b) in mindestens eine der zu verklebenden Oberflächen hinein. Weiter bevorzugt diffundiert dieser Teil des Klebers bis zu mindestens 1 µm, bevorzugt mindestens 10 µm weiter, bevorzugt mindestens 50 µm, weiter bevorzugt mindestens 100 µm, insbesondere bevorzugt zwischen 50 und 300 µm in eine der zu verklebenden Oberflächen hinein.

Unter einem dauerelastischen Verkleben ist hierbei jegliches Verkleben zu verstehen, das mindestens zwei Oberflächen, wovon mindestens eine Oberfläche eine Oberfläche eines dauerelastischen Kunststoffs ist, miteinander verklebt und eine daraus resultierende Verklebung zwischen den Oberflächen eine hohe Elastizität, also Verformbarkeit und Dehnbarkeit aufweist. Diese Elastizität der Verklebung ist besonders beim Verkleben von Gummioberflächen entscheidend, da sich Gummioberflächen verformen und dehnen können. Da Gummi als Werkstoff bevorzugt in Bereichen eingesetzt wird, wo dessen Verformbarkeit und Dehnbarkeit dauerhaft genutzt wird, werden auch Klebestellen bzw. Verklebungen diesen Formänderungen ausgesetzt. Durch eine hohe Elastizität der Verklebung kann ein Brechen der Verklebung verhindert bzw. reduziert werden und eine daraus möglicherweise resultierende Trennung der verklebten Oberflächen vermieden werden.

In einer bevorzugten Variante umfasst der dauerelastische Kunststoff, dessen Oberfläche verklebt wird Gummi. Der Werkstoff "Gummi" soll im Zusammenhang mit der vorliegenden Erfindung allgemein verstanden werden als jegliche Form von Vulkanisaten von Natur- und/oder Synthesekautschuken. Sofern die vorliegende Erfindung am Beispiel Gummi beschrieben ist, soll dies dennoch als lediglich ein exemplarisches Ausführungsbeispiel verstanden werden und das Verfahren allgemein zum Verkleben von zwei Oberflächen miteinander, wovon mindestens eine Oberfläche eine Oberfläche eines dauerelastischen Kunststoffs ist, gelten. Analog gilt dies auch für den dauerelastischen Klebstoff, welcher - auch wenn am Beispiel Gummi beschrieben - ebenfalls allgemein zum dauerelastischen Verkleben zweier Oberflächen eingerichtet ist, wobei eine der miteinander zu verklebenden Oberflächen eine Oberfläche eines dauerelastischen Kunststoffs ist.

Weiter denkbar ist es, dass die mindestens eine Oberfläche, die mit der Oberfläche des dauerelastischen Kunststoffs verklebt wird, ebenfalls ein dauerelastischer Kunststoff ist, bevorzugt Gummi ist oder Gummi umfasst, oder aus einem Material besteht oder ein Material umfasst, dass ausgewählt ist aus einer Gruppe, die Metall, Glas, Keramik, Holz und Textil umfasst.

Durch die mindestens zwei Verfestigungsmechanismen des Klebstoffs, wobei der mindestens erste Verfestigungsmechanismus des Klebstoffs mindestens eine chemische Reaktion unter Ausbildung einer mindestens ein Schwefelatom einschließenden chemischen Bindung umfasst, und der mindestens zweite Verfestigungsmechanismus des Klebstoffs mindestens die Ausbildung kristalliner Strukturen aus amorphen Polymeren umfasst, wird eine besonders feste Verklebung erreicht. Die chemische Reaktion unter Ausbildung einer mindestens ein Schwefelatom einschließenden chemischen Bindung während des ersten Verfestigungsmechanismus des Klebstoffs, erfolgt bevorzugt durch die chemische Reaktion einer reaktiven Gruppe des Klebstoffs, die bevorzugt ein Schwefelatom, ein Sauerstoffatom oder eine (bevorzugt C-C-) Doppelbindung umfasst, mit einer mindestens ein Schwefelatom und/oder eine (bevorzugt C-C-) Doppelbindung enthaltenden reaktiven Gruppe des dauerelastischen Kunststoffs. Somit ergibt sich eine besonders starke Adhäsion zwischen Grenzschichten des Klebstoffs und des dauerelastischen Kunststoffs. Insbesondere bevorzugt ist dabei die Ausbildung einer Schwefel-Schwefel-Bindung, einer Schwefel-Sauerstoff-Bindung, einer Schwefel-Kohlenstoff-Bindung, welche jeweils eine besonders starke Adhäsion zwischen Grenzschichten des Klebstoffs und des dauerelastischen Kunststoffs ermöglichen. Ebenfalls denkbar wäre die Ausbildung einer Schwefel-Wasserstoff-Bindung und deren Adhäsion (z.B. über Van-der-Vaals-Kräfte) mit der jeweils anderen Komponente der Verbindung.

Durch die Ausbildung kristalliner Strukturen aus amorphen Polymeren während des zweiten Verfestigungsmechanismus des Klebstoffs, werden bevorzugt Polymermoleküle so angeordnet, dass sich Assoziationsflächen vergrößern und auf diese Weise anziehende Wechselwirkungen zwischen den Polymermolekülen verstärkt werden.

Im Gegensatz zu aus dem Stand der Technik bekannten Verfahren zum hochfesten und dauerelastischen Verkleben von mindestens zwei Oberflächen miteinander, wovon mindestens eine Oberfläche eine Oberfläche eines dauerelastischen Kunststoffs ist, bietet das erfindungsgemäße Verfahren den Vorteil, dass der erste Verfestigungsmechanismus und der zweite Verfestigungsmechanismus des Klebstoffs bevorzugt ohne hohen technischen Aufwand und hohe Temperaturen abläuft, wie er beispielsweise beim Vulkanisieren notwendig ist. Somit ist eine einfache und sichere Anwendung des Verfahrens gewährleistet. Bevorzugt ist es somit auch von nicht speziell ausgebildeten Anwendern und/oder in schlecht zugänglicher Umgebung und/oder ohne Stromzufuhr durchführbar. Ein solches Verfahren bietet somit deutliche Vorteile gegenüber Verfahren zum Verkleben von Gummioberflächen mit deutlich erhöhtem technischem und materiellem Aufwand wie beispielsweise eine Vulkanisation.

Weiterhin stellt das erfindungsgemäße Vorliegen von zwei verschiedenen Verfestigungsmechanismen einen wesentlichen Vorteil gegenüber Verfahren, bei denen die verwendeten Klebstoffe nur einen Verfestigungsmechanismus aufweisen dar. Bei der Verwendung von beispielsweise Kontaktklebstoffen basiert die Verklebung lediglich auf der Ausbildung von kristallinen Strukturen aus Polymeren. Durch die erfindungsmäßige Kombination der beiden verschiedenen Verfestigungsmechanismen können die Vorteile beider Verfestigungsmechanismen in vorteilhafter Weise genutzt werden und so eine deutliche Verstärkung der Verklebung erreicht werden.

Als geeignete Arbeits- und/oder Umgebungsbedingungen haben sich für die Schritte b) und/oder d) des Verfahrens gezeigt, eine Umgebungstemperatur und/oder Materialtemperatur zwischen -40 und +80 °C, bevorzugt zwischen -20 und +70°C, weiterhin bevorzugt zwischen -5 und +65°C und besonders bevorzugt zwischen +5 und +60°C. Sollte aufgrund von außerhalb dieses Bereichs liegenden Umgebungsbedingungen die Verarbeitung nicht oder nur erschwert möglich sein, bietet es sich an, zumindest den Kleber und die zu verklebenden Bereiche bis auf den oben angegebenen Temperaturbereich zu temperieren. Die Verarbeitung innerhalb dieser Temperaturbereiche ist aufgrund der einfacheren Handhabung und für die meisten Fälle geeignete Reaktions-/Abbindezeiten des Klebers bevorzugt. Dennoch hat sich gezeigt, dass der oben beschriebene Kleber in einem weiteren Temperaturbereich, nämlich bevorzugt mindestens im Bereich von -40 - 120°C verarbeitbar ist. Die Verarbeitungszeiten sollten bei von den oben genannten bevorzugten Verarbeitungstemperaturen abweichenden Temperaturen entsprechend angepasst werden.

Unabhängig von den vorgenannten bevorzugten Arbeits- und/oder Umgebungstemperaturen ist des Weiteren bevorzugt, dass die Verklebeflächen zumindest weitgehend trocken, staub-, fett- und/oder ölfrei sind.

Der oben beschriebene Kleber kann weitere Komponenten wie beispielsweise Lösungsmittel, Primer, Füllstoffe oder Kombinationen davon umfassen. Lösungsmittel können beispielsweise in einem Anteil von bis zu 85 Gewichts-% (bezogen auf die Gesamtmasse des Klebers im nicht ausgehärteten Zustand) enthalten sein. Sofern im Folgenden eine Prozentangabe nicht explizit anders definiert ist, soll eine Prozentangabe jeweils als Gewichtsprozent bezogen auf die Gesamtmasse des Klebers im nicht ausgehärteten Zustand verstanden werden. Lösungsmittel in der Kleberzusammensetzung haben den Vorteil, dass sie die Diffusion Klebeaktiver Komponenten innerhalb der Klebemasse fördern könnten. Insbesondere bei den bevorzugten mehrkomponentigen Klebern könnte eine beschleunigte Diffusion vorteilhaft sein.

Untersuchungen haben jedoch gezeigt, dass auch ohne hohe Lösungsmittelanteile bereits eine ausreichende Vermischung der Komponenten und ausgezeichnete Klebeeigenschaften realisierbar sind. Daher hat sich als bevorzug herausgestellt, den Anteil des Lösungsmittels auf weniger als 50 Gewichts-%, bevorzugt weniger als 30 Gewichts-% zu reduzieren. In einer bevorzugten Zusammensetzung umfasst der Kleber 10 - 20 Lösungsmittel, bevorzugt 10 - 15 Lösungsmittel.

Als bevorzugt hat sich erwiesen, wenn für das Verfahren ein Klebstoff mit weniger als 5 Gewichts-% Lösungsmittel, bevorzugt weniger als 3 Gewichts-% Lösungsmittel, weiter bevorzugt weniger als 1 Gewichts-% Lösungsmittel verwendet wird und besonders bevorzugt ein lösungsmittelfreier Klebstoff verwendet wird, so dass ein zur Verdunstung von Lösungsmittel notwendiges Mindestzeitintervall zwischen den Schritten b) und c) bei einer Umgebungstemperatur zwischen 20 und 25°C weniger als 1 Stunden, bevorzugt weniger als 30 Minuten, weiter bevorzugt weniger als 15 Minuten beträgt. Durch diese - und insbesondere die besonders bevorzugte Verwendung des lösungsmittelfreien Klebstoffs - kann gewährleistet werden, dass keine durch leichtflüchtige Lösungsmittel hervorgerufenen Risiken für Mensch und Umwelt entstehen und das Verfahren ohne weitreichende Sicherheitsmaßnahmen und an schlechtbelüfteten Orten durchführbar ist. Weiterhin kann bei der besonders bevorzugten Verwendung des lösungsmittelfreien Klebstoffs das notwendige Mindestzeitintervall zur Verdunstung des Lösungsmittels zwischen den Schritten b) und c) bei einer Umgebungstemperatur zwischen 20 und 25°C minimiert werden und so eine Dauer des Verfahrens reduziert werden, was in einer verringerten Arbeitszeit des Anwenders resultiert.

Gemäß einer bevorzugten Ausführungsform ist der Klebstoff ein 2-Komponentenklebstoff, welcher bevorzugt in einer Doppelkartusche bereitgestellt wird und weiter bevorzugt mittels einer dazu kompatiblen Kartuschen-Pistole auf die zu verklebende Oberfläche aufgebracht wird. Eine Verwendung von 2-Komponentenklebstoffen hat sich als vorteilhaft erwiesen, da der 2-Komponentenklebstoff erst aushärtet, sobald zwei Komponenten des Klebstoffs vermischt werden. Da die zwei Komponenten getrennt voneinander in der Doppelkartusche bereitgestellt werden und nicht miteinander reagieren können, wird somit eine gute Lagerfähigkeit erreicht. In einer bevorzugten Ausführungsform des Klebstoffs kann so dessen Verwendbarkeit über einen Zeitraum von mindestens einem Jahr, bevorzugt über mindestens 18 Monate, insbesondere bevorzugt mindestens 2 Jahre erreicht werden. Durch die Verwendung der kompatiblen Kartuschen-Pistole können die zwei Komponenten im vorgesehenen Mischungsverhältnis (bevorzugt im Bereich 10:1 bis 1:3, insbesondere bevorzugt 1:1, jeweils bezogen auf das Volumen) auf die zu beaufschlagenden Oberflächen aufgetragen werden.

In einer Verfahrensvariante ist bevorzugt, dass der Klebstoff in einer Menge unter 500 g/m², bevorzugt unter 300 g/m², weiter bevorzugt unter 200 g/m², insbesondere bevorzugt unter 100 g/m² auf die zu verklebende Oberfläche aufgebracht wird. Dadurch ist eine hohe Wirtschaftlichkeit aufgrund geringer Klebstoffmengen, die zum Verkleben notwendig ist gewährleistet. Außerdem lassen sich auf diese Weise hochfeste und dauerelastische Verklebungen mit sehr dünnen Spaltbreiten realisieren

Es ist bevorzugt, dass zumindest die den dauerelastischen Kunststoff umfassende Oberfläche bevorzugt beide zu verklebenden Oberflächen vor Schritt a) gesäubert und angeraut werden, bevorzugt unter Verwendung eines Werkzeugs ausgewählt aus einer Gruppe, die Anrauer, Winkelschleifer, (Gurt-) Hobel, Bürsten, Schleifbänder, Schleifscheiben, Fräser und andere umfasst, wodurch auch die produktionsbedingte Trennschicht auf der Oberfläche entfernt wird und für die Oberfläche des dauerelastischen Kunststoffs ein bestmögliches Verkleben erreicht werden kann. Weiterhin kann auf eine Vorbehandlung der Klebeflächen mit einem chemischen Reiniger und/oder einem Haftvermittler verzichtet werden, wie es bei Verfahren zum Verkleben aus dem Stand der Technik bekannt ist. Das Vermeiden dieser zum Teil leicht flüchtigen Substanzen ist insbesondere in schlecht belüfteter Umgebung wie beispielsweise unter Tage vorteilhaft.

Bevorzugt ist, dass mindestens eine, bevorzugt beide der zu verklebenden Oberflächen bei Beaufschlagung mit einer Prüfsubstanz einer Oberflächenspannung unter 50 mN/m, bevorzugt ≤ 46 mN/m, weiter bevorzugt ≤ 38 mN/m, besonders bevorzugt ≤ 30 mN/m, insbesondere bevorzugt ≤ 20 mN/m, eine flächige Benetzung mit der Prüfsubstanz aufweist. Die damit einhergehende gleichmäßige Benetzbarkeit ermöglicht eine ausreichend gleichmäßige Benetzung der zu verklebenden Oberflächen mit dem Kleber und somit eine homogene Klebekraft über die gesamte Klebefläche.

Eine Variante des Verfahrens zeichnet sich dadurch aus , dass die zu verklebenden Oberflächen nach Schritt d) mittels einer geeigneten Fixiereinrichtung, bevorzugt einer Druckbeaufschlagungseinrichtung, gegenüber einander fixiert und/oder druckbeaufschlagt werden, wobei die Druckbeaufschlagungseinrichtung bevorzugt mindestens ein Druckelement, insbesondere bevorzugt mindestens eine Schraubzwinge, und mindestens ein Druckverteilelement umfasst, wobei das mindestens eine Druckverteilelement den durch das mindestens eine Druckelement erzeugten Druck über eine Fläche verteilt, die den Verklebebereich umfasst. Eine solche bevorzugte Druckbeaufschlagungseinrichtung gewährleistet ein präzises Verkleben ohne Positionsänderung der Oberflächen und eine optimale Adhäsion, da der erzeugte Druck gleichmäßig auf den Verklebebereich verteilt und ein ausreichender Kontakt der zu verklebenden Oberflächen gesichert wird.

Eine bevorzugte Variante zeichnet sich weiterhin dadurch aus, dass die zu verklebenden Oberflächen Teile eines dauerelastischen Kunststoffbandes, bevorzugt eines Transportbandes sind, wobei die zu verklebenden Oberflächen bevorzugt gegenüberliegende Enden des dauerelastischen Kunststoffbandes sind, welche zu einem Endlosband zusammengefügt werden oder auf gegenüberliegenden Seiten einer Schadstelle, insbesondere eines Loches oder Risses, eines Endlosbandes angeordnet sind. Das Verfahren ist jedoch nicht auf die oben erwähnte Verbindung gegenüberliegender Enden eines dauerelastischen Kunststoffbandes beziehungsweise Transportbandes zu einem Endlosband beschränkt. Selbstverständlich können auch mehrere zuvor separate Abschnitte eines Bandes zu einem einzigen Band zusammengefügt werden. Dies vereinfacht den Transport der Bandabschnitte zum Einsatzort, da die Bandabschnitte einzeln transportiert werden können und aufgrund der gegenüber dem gesamten Band geringeren Länge einfacher zu handhaben sind. So kann in unwegsamer Umgebung - beispielsweise unter Tage - weitgehend auf schweres Gerät zur Handhabung des Bandes verzichtet werden. Vielmehr könnten einzelne Bandabschnitte in die Mine transportiert werden und dort miteinander verbunden werden.

Der erfindungsgemäße hochfest und dauerelastisch aushärtbare Klebstoff gemäß Patentanspruch 8, welcher dafür vorgesehen und eingerichtet ist, mindestens zwei Oberflächen, wovon mindestens eine Oberfläche eine Oberfläche eines dauerelastischen Kunststoffs ist, miteinander, insbesondere bevorzugt nach einem Verfahren gemäß einem der vorangehenden Ansprüche, zu verkleben, zeichnet sich insbesondere dadurch aus, dass er ein in mindestens zwei verschiedenen Verfestigungsmechanismen aushärtender Klebstoff ist, wobei der erste Verfestigungsmechanismus mindestens eine chemische Reaktion unter Ausbildung einer mindestens ein Schwefelatom einschließenden chemischen Bindung umfasst und der zweite Verfestigungsmechanismus mindestens die Ausbildung kristalliner Strukturen aus amorphen Polymeren umfasst. Durch die Kombination der Eigenschaften aus Ausbildung einer mindestens ein Schwefelatom einschließenden chemischen Bindung und der Ausbildung kristalliner Strukturen aus amorphen Polymeren ermöglicht ein solcher Klebstoff nicht nur die Bindung an Oberflächen von dauerelastischen Kunststoffen, sondern bietet auch die von Kontaktklebstoffen bekannte außerordentlich stakte Haftung.

Erfindungsgemäß umfasst der oben beschriebene Klebstoff eine Polyurethankomponente. Es hat sich überraschender Weise herausgestellt, dass eine solche Komponente - insbesondere bevorzugt bei einer Ausführungsform als Mehrkomponentenklebstoff, bevorzugt Zweikomponentenklebstoff - besonders starke Verbindungen bewirkt.

Weiterhin bevorzugt ist eine Ausführungsform des Klebstoffs welche weniger als 5 Gewichts-% Lösungsmittel, bevorzugt weniger als 3 Gewichts-% Lösungsmittel, weiter bevorzugt weniger als 1 Gewichts-% Lösungsmittel umfasst und insbesondere bevorzugt lösungsmittelfrei ist. Diese Ausführungsform hat sich insbesondere für den Einsatz in schlecht mit Frischluft versorgbarer Umgebung (z. B. Minen unter Tage) erwiesen. Außerdem können dadurch umweltschädigende Eigenschaften des Klebstoffs vermieden werden. Überraschender Weise ist auch ohne Lösungsmittel eine ausreichende Diffusion der Komponenten gegeben, so dass großflächig eine ausreichend große Haftkraft ausgebildet wird.

Bevorzugt zeichnet sich der Klebstoff dadurch aus, dass er durch die Auswahl und das Mengenverhältnis von schwefelspendender Komponente und Polyurethankomponente so eingestellt ist, dass die mindestens zwei verschiedenen Verfestigungsmechanismen bei einer Umgebungstemperatur im Bereich von -50 bis +80°C, bevorzugt -30 bis +70°C, weiter bevorzugt -10 bis +65°C, insbesondere bevorzugt 0 bis +60°C initiierbar sind. Die Einstellung auf eine Aushärtung in diesem Temperaturbereich hat sich als vorteilhaft erwiesen, da in diesem Bereich die Oberflächen der zu verklebenden dauerelastischen Kunststoffe nicht beschädigt werden und dennoch eine rasche Reaktion oder Aushärtung eintritt.

Bevorzugt ist außerdem, dass der Klebstoff im ausgehärteten Zustand eine Reißfestigkeit > 6 N/mm², bevorzugt > 8 N/mm², bevorzugt > 10 N/mm², weiter bevorzugt > 12 N/mm², insbesondere bevorzugt > 15 N/mm² aufweist. Diese Reißfestigkeit hat sich insbesondere für die Verbindung von Enden von Transportbändern als vorteilhaft erwiesen, da somit gewährleistet ist, dass auch eine dauerhafte Zugbelastung nicht zum Reißen der Verbindungsstelle führt.

In einer bevorzugten Ausführungsform des Klebstoffs weist der Klebstoff im ausgehärteten Zustand ein E-Modul im Bereich von 0,2 - 40 N/mm², bevorzugt von 0,3 - 30 N/mm² und insbesondere bevorzugt von 0,4 - 20 N/mm² auf. Dieser Bereich des E-Modul hat sich als vorteilhaft erwiesen, da in diesem Bereich die notwendige Elastizität gegeben ist, um der Verformung der Oberflächen der zu verklebenden dauerelastischen Kunststoffe folgen zu können. Insbesondere bei Verbindung von Enden von Transportbändern ist dies wichtig, da diese über Umlenkrollen geführt werden und so auch die Verbindungsstelle der dort auftretenden Verformung unbeschadet folgen können muss.

Bevorzugt ist, dass der Klebstoff im ausgehärteten Zustand auf SBR-Gummi eine Schälfestigkeit > 4 N/mm, bevorzugt > 6 N/mm, bevorzugt > 8 N/mm, weiter bevorzugt > 10 N/mm, insbesondere bevorzugt > 12 N/mm aufweist. Diese Schälfestigkeit hat sich insbesondere bei Verbindung von Enden von Transportbändern als vorteilhaft erwiesen, da bei Transportbändern, insbesondere im Bereich von Umlenkrollen, Schälkräfte auftreten können und so auch die Verbindungsstelle den dort auftretenden Schälkräfte unbeschadet widerstehen kann.

In einer bevorzugten Ausführungsform weist der Klebstoff im ausgehärteten Zustand eine Shore-A-Härte im Bereich von 50 - 99 Shore, bevorzugt 55 - 95 Shore, besonders bevorzugt 60 - 90 Shore (gemessen nach DIN EN ISO 868 oder DIN ISO 7619-1) auf. Dieser Bereich hat sich als vorteilhaft erwiesen, da so ähnliche Werkstoffkennwerte wie im Bereich der zu verklebenden Oberflächen vorliegen. Der Übergang von den zu verklebenden Oberflächen zur Klebestelle ist somit bevorzugt fließend. Die Shore-A-Härte kann beispielsweise durch den Vernetzungsgrad im Klebstoff sowie mögliche Füllstoffe eingestellt werden.

Bevorzugt ist, dass der Klebstoff im ausgehärteten Zustand auf Metallen, galvanisierten Stählen und/oder (SBR-) Gummi eine Scherfestigkeit > 4 N/mm², bevorzugt > 6 N/mm², bevorzugt > 8 N/mm², weiter bevorzugt > 10 N/mm², insbesondere bevorzugt > 12 N/mm² aufweist. Diese Scherfestigkeit hat sich insbesondere bei Verbindung von Enden von Transportbändern als vorteilhaft erwiesen, da bei Transportbändern, insbesondere im Bereich von Umlenkrollen, Scherkräfte auftreten können und so auch die Verbindungsstelle den dort auftretenden Scherkräften unbeschadet widerstehen kann.

Darüber hinaus kann der oben genannte Kleber sowie das oben beschriebene Verfahren auch für das Verbinden jeglicher dauerelastischer Oberflächen verwendet werden. Dies bezieht sich nicht nur auf Bänder jeglicher Art wie beispielsweise Riemen für Rundballenpressen oder andere landwirtschaftliche Geräte, Förderbänder in der Rohstoff- und Bergbauindustrie, sondern auch auf von Bändern abweichende Oberflächen. Ein weiterer denkbarer Einsatz ist beispielsweise das Aufkleben eines dauerelastischen Kunststoffs auf empfindliche Oberflächen. Beispielsweise kann es sich bei den mit einem dauerelastischen Kunststoff zu beaufschlagenden Flächen um Oberflächen von Trommeln (beispielsweise als Stütze der Antriebseinrichtung für Transportbänder) oder die Innenflächen von Gebinden (beispielsweise Bunkern oder Trichtern) handeln, in die (beispielsweise scharfkantiges) Schüttgut eingefüllt werden soll. Weiterhin wäre auch das Aufkleben von dauerelastischen Kunststoff (z.B. Gummi) beispielsweise in Form von Antirutschmatten oder Schonauflagen auf jegliche Oberflächen denkbar, auf denen das Abrutschen von darauf angeordneten Gegenständen vermieden werden soll oder der abgelegte Gegenstand besonders geschützt werden soll.

Ein weiterer Vorteil des oben beschriebenen Verfahrens sowie des dazu eingesetzten, oben beschriebenen Klebstoffs ist, dass nach dem Ablaufen des zweiten Verfestigungsmechanismus beziehungsweise dem Ausbilden kristalliner Strukturen im Klebstoff die durch die Klebestelle neu geschaffene Verbindung zwischen der ersten und der zweiten Oberfläche sofort (zumindest leicht) belastbar ist. Auch wenn - wie oben beschrieben - Wartezeiten zur vollständigen Aushärtung teilweise bevorzugt sind, ist eine Belastung (bevorzugt unterhalb der Maximalbelastung) bereits unmittelbar möglich.

Weiterhin ist bevorzugt, dass das sowohl das oben beschriebene Verfahren als auch der Klebstoff für verschiedene Arten von Transportbändern eingesetzt werden können. Insbesondere können die zu verbindenden Oberflächen Oberflächen von einlagigen oder mehrlagigen, insbesondere zweilagigen Transportbändern sein. Außerdem und unabhängig davon können die Oberflächen Oberflächen von verstärkten oder unverstärkten Transportbändern sein. Als verstärkte Transportbänder sollen diesbezüglich sowohl mit einem oder mehreren Textilelemente(n) (z. B. Textilgewebe) verstärkte als auch mit einem oder mehreren Metallelemente(n) (z. B. Stahlseilen) verstärkte Transportbändern verstanden werden. Im Gegensatz zu aus dem Stand der Technik bekannten Kontaktklebstoffen bietet der Kleber gemäß der vorliegenden Erfindung somit bevorzugt die Möglichkeit, dass er auch eine Verbindung mit Textilstoffen, Metallen, z. B. Stahl, und anderen eingehen kann und somit auch ohne Gummierung diese Materialien über eine zu verklebende Oberfläche mit einer anderen Oberfläche verkleben kann.

Das Verfahren lässt sich bevorzugt sowohl für Stufenverbindungen als auch für Fingerverbindungen verwenden. Fingerverbindungen lassen sich sowohl bei Metall- (z.B. Stahlseil-) und Textilverstärkten Kunststoffen als auch bei nicht verstärkten Kunststoffen realisieren.

Weitere Vorteile, Ziele und Eigenschaften vorliegender Erfindung werden anhand nachfolgender Beschreibung anliegender Figuren erläutert, in welcher beispielhaft die Verwendung eines wie oben beschriebenen hochfesten und dauerelastischen Klebstoffes sowie ein Verfahren zum hochfesten und dauerelastischen Verkleben von mindestens zwei Oberflächen miteinander, wovon mindestens eine Oberfläche eine Oberfläche eines dauerelastischen Kunststoffs ist, mittels eines Klebstoffes dargestellt ist. Teile der Vorrichtung zum Verkleben und/oder Verfahrensschritte, welche in den Figuren wenigstens im Wesentlichen hinsichtlich ihrer Funktion übereinstimmen, können hierbei mit gleichen Bezugsziffern gekennzeichnet sein, wobei diese Teile und/oder Verfahrensschritte nicht in allen Figuren beziffert und erläutert sein müssen.

Es zeigen:
- Fig. 1:: zwei komplementäre, zum Verbinden mittels eines hochfesten und dauerelastischen Klebstoffes vorbereitete Transportbandenden;
- Fig. 2:: eine Aufsicht auf ein Stufenprofil eines zum Verbinden mittels eines hochfesten und dauerelastischen Klebstoffes vorbereiteten Transportbandendes;
- Fig. 3:: eine Seitenansicht eines möglichen Aufbaus einer Verbindung zwischen zwei Transportbandenden mittels eines hochfesten und dauerelastischen Klebstoffes;
- Fig. 4a:: eine schematische Darstellung eines Verfahrensschritts zum Erstellen des Stufenprofils an einem Transportbandende;
- Fig. 4b:: eine schematische Darstellung eines Verfahrensschritts zum Anrauen der zu verklebenden Oberfläche des Stufenprofils an einem Transportbandende;
- Fig. 4c:: eine schematische Darstellung eines Verfahrensschritts zum Aufbringen des Klebers auf das Stufenprofil an einem Transportbandende;
- Fig. 4d:: eine schematische Darstellung eines Verfahrensschritts zum Verteilen des Klebers auf das Stufenprofil an einem Transportbandende;
- Fig. 4e:: eine schematische Darstellung eines Verfahrensschritts zum Verkleben der Stufenprofile zweier Transportbandenden;
- Fig. 4f:: eine schematische Darstellung eines Verfahrensschritts zum Nachbereiten einer Stoßlücke zwischen zwei Transportbandenden;
- Fig. 4g:: eine schematische Darstellung eines Verfahrensschritts zur Druckbeaufschlagung mittels einer Fixiervorrichtung;
- Fig. 5a:: eine schematische Darstellung eines Verfahrensschritts zum Anrauen von Klebeflächen eines Trommelbelags;
- Fig. 5b:: eine schematische Darstellung eines Verfahrensschritts zum Aufbringen des Klebers auf eine Trommel;
- Fig. 5c:: eine schematische Darstellung eines Verfahrensschritts zum Aufbringen des Klebers auf den Trommelbelag;
- Fig. 5d:: eine schematische Darstellung eines Verfahrensschritts zum Aufkleben eines Endes des Trommelbelags auf eine Trommel;
- Fig. 5e:: eine schematische Darstellung eines Verfahrensschritts zum Umwickeln der Trommel mit dem Trommelbelag;
- Fig. 5f:: eine schematische Darstellung eines Verfahrensschritts zum Kürzen überlappender Trommelbelagenden;
- Fig. 5g:: eine schematische Darstellung eines Verfahrensschritts zum Verkleben der Trommelbelagenden miteinander;
- Fig. 5h:: eine schematische Darstellung eines Verfahrensschritts zum Entfernen von über Seitenflächen der Trommel überstehender Kanten des Trommelbelags;
- Fig. 6:: eine schematische Querschnittsdarstellung eines mit Stahlseilgurten verstärkten Transportbandes;
- Fig. 7a - c:: schematische Darstellungen verschiedener Varianten möglicher Verbindungen von Enden eines mit Stahlseilgurten verstärkten Transportbandes;
- Fig. 8a, b:: schematische Querschnittsdarstellungen zu verbindender bzw. verbundener Enden eines mit Stahlseilgurten verstärkten Transportbandes;
- Fig. 9a:: eine schematische Darstellung eines Verfahrensschritts zum Vorbereiten zu verbindender Enden von mit Stahlseilgurten verstärkten Transportbändern;
- Fig. 9b:: eine schematische Darstellung eines weiteren Verfahrensschritts zum Vorbereiten zu verbindender Enden von mit Stahlseilgurten verstärkten Transportbändern;
- Fig. 9c:: eine schematische Darstellung eines Verfahrensschritts zum Ausbilden von miteinander verbindbarer Finger an zu verbindenden Enden von mit Stahlseilgurten verstärkten Transportbändern;
- Fig. 9d:: eine schematische Darstellung eines Verfahrensschritts zum Aufbringen des Klebers auf Oberflächen der miteinander zu verbindenden Enden von mit Stahlseilgurten verstärkten Transportbändern;
- Fig. 9e:: eine schematische Darstellung eines Verfahrensschritts zum Verkleben von Fingern von miteinander zu verbindenden Enden von mit Stahlseilgurten verstärkten Transportbändern;
- Fig. 9f:: eine schematische Darstellung eines Verfahrensschritts zum Aufbringen des Klebers auf miteinander verbundener Finger von mit Stahlseilgurten verstärkten Transportbändern;
- Fig. 9g:: eine schematische Darstellung eines zum Aushärten des Klebers fixierten, mit Stahlseilgurten verstärkten Transportbandes;
- Fig. 10a, b:: schematische Darstellungen geeigneter Fixiervorrichtungen für eine gleichmäßige Druckverteilung über die Verbindungsstelle;
- Fig. 11a -c:: schematische Darstellungen von Verfahrensschritten zum Vorbereiten zu verbindender Enden von mit Stahlseilgurten verstärkten Transportbändern;
- Fig. 11d:: eine schematische Darstellung eines Verfahrensschritts zum Ausbilden einer Vielzahl von Einkerbungen oder Furchen, die zwischen den jeweils ein Stahlseil umschließenden Stegen angeordnet sind;

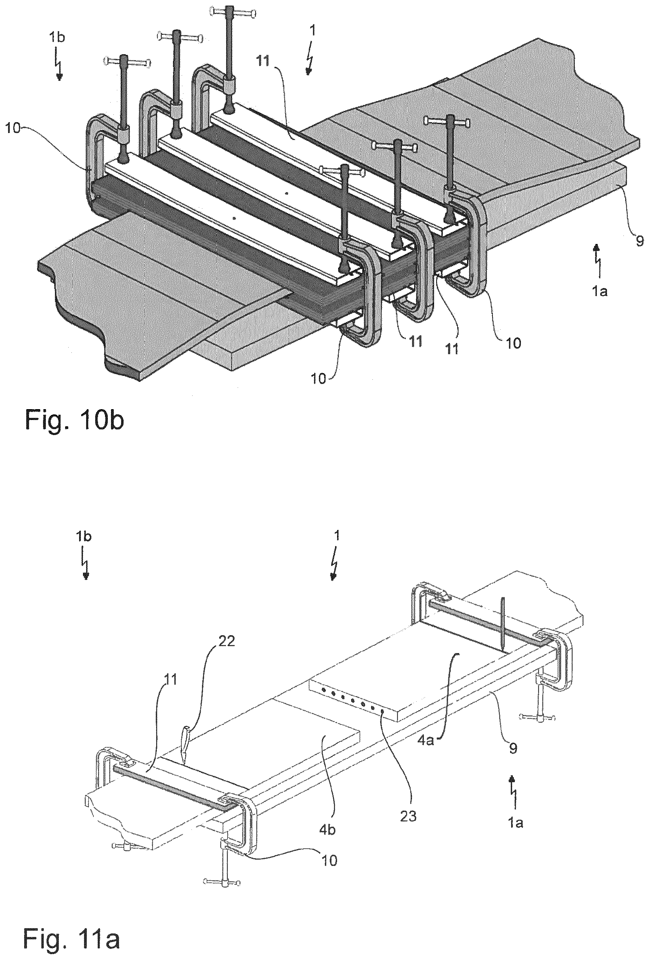

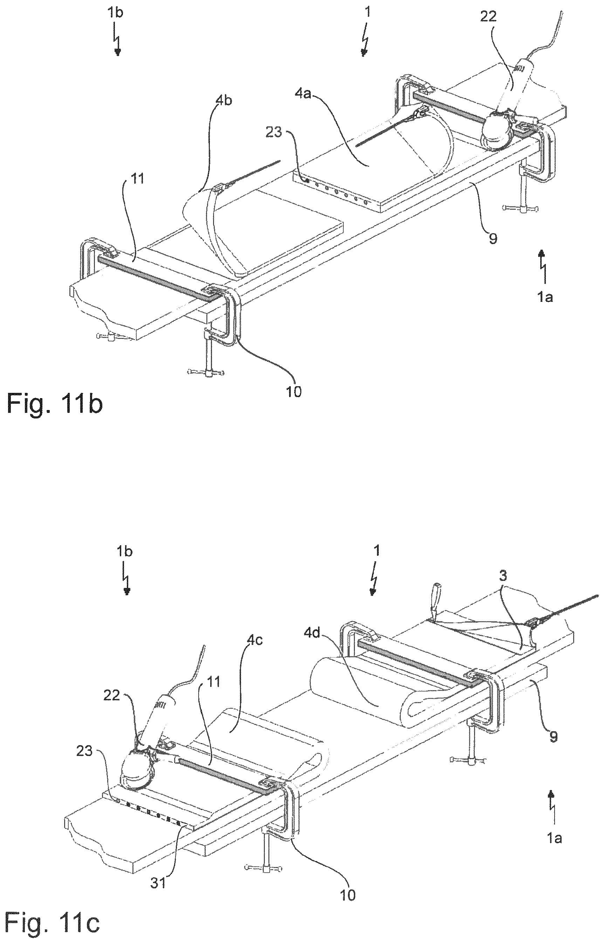

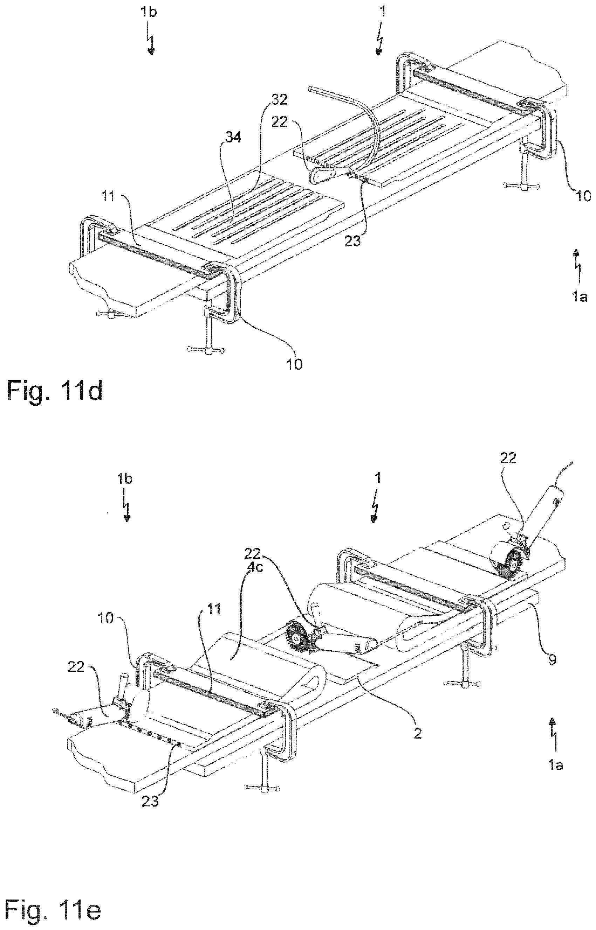

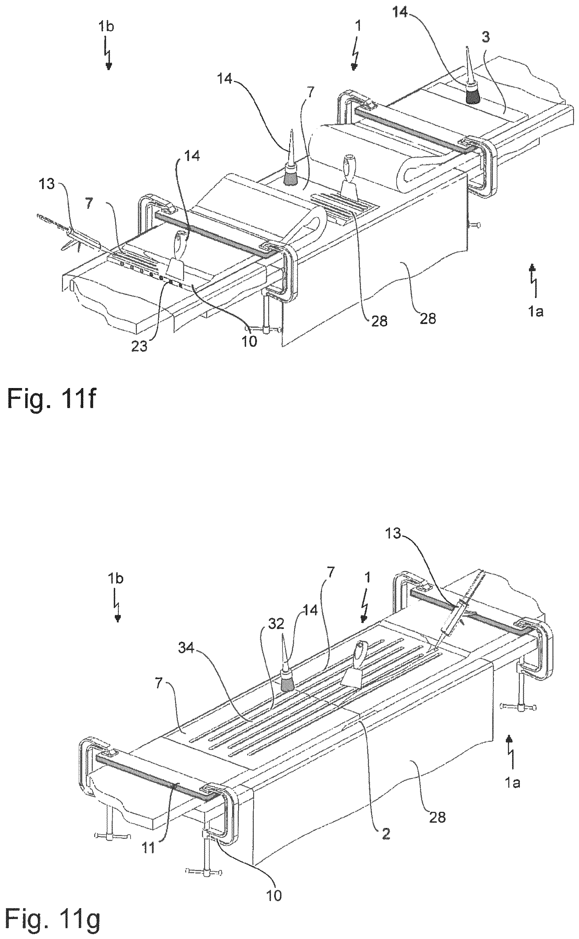

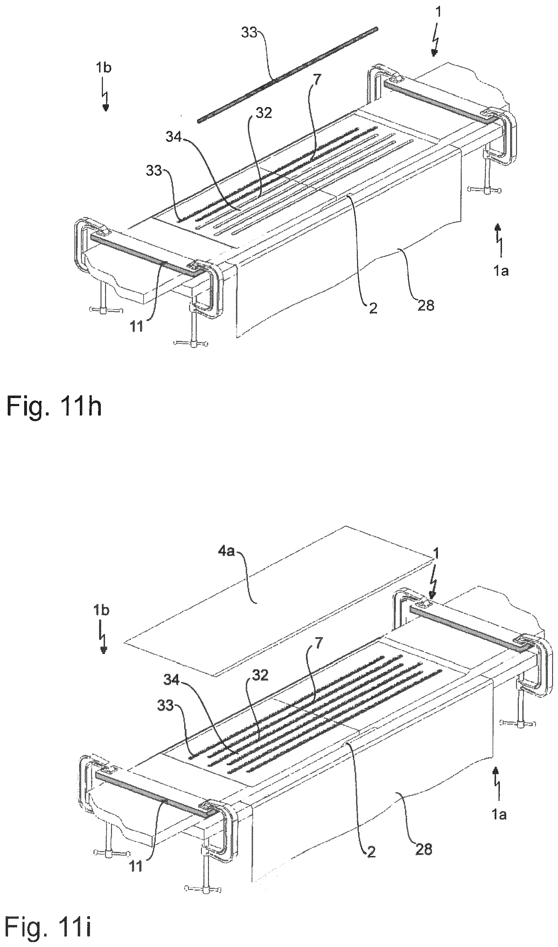

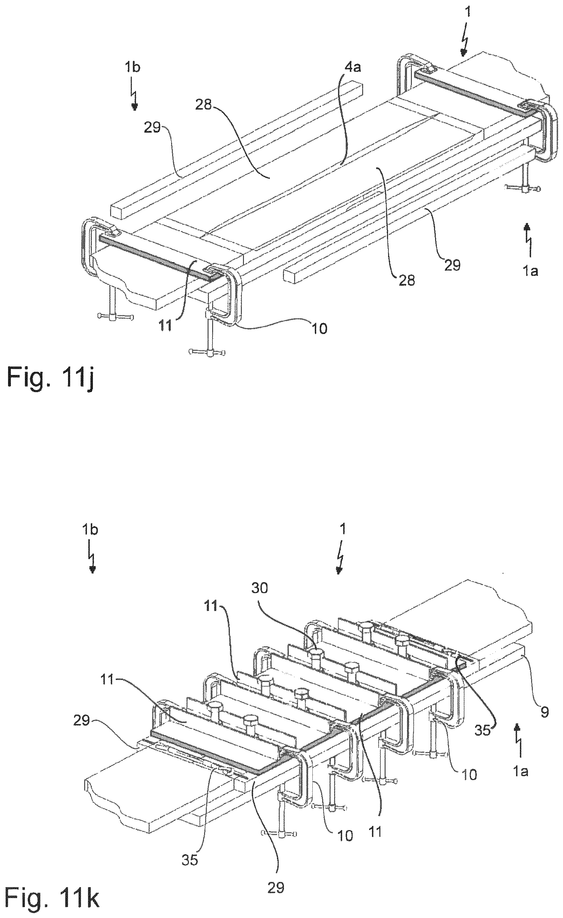

- Fig. 11 e:: eine schematische Darstellung eines Verfahrensschritts zum Vorbereiten der zu verklebenden Oberflächen;
- Fig. 11f, g:: schematische Darstellungen von Verfahrensschritten zum Aufbringen des Klebers auf Oberflächen der miteinander zu verbindenden Enden von mit Stahlseilgurten verstärkten Transportbändern;
- Fig. 11h:: schematische Darstellungen von Verfahrensschritten zum Einbringen der Zugbelastungsübertragungsmittel;
- Fig. 11i:: eine schematische Darstellung eines Verfahrensschritts zum Aufbringen der Decklage;
- Fig. 11j:: eine schematische Darstellung eines Verfahrensschritts zum Anlegen von Kantenschienen zum Fixieren der Verbindungsstelle in Breitenrichtung;
- Fig. 11k:: eine schematische Darstellung eines zum Aushärten des Klebers fixieren, mit Stahlseilgurten verstärkten Transportbandes;

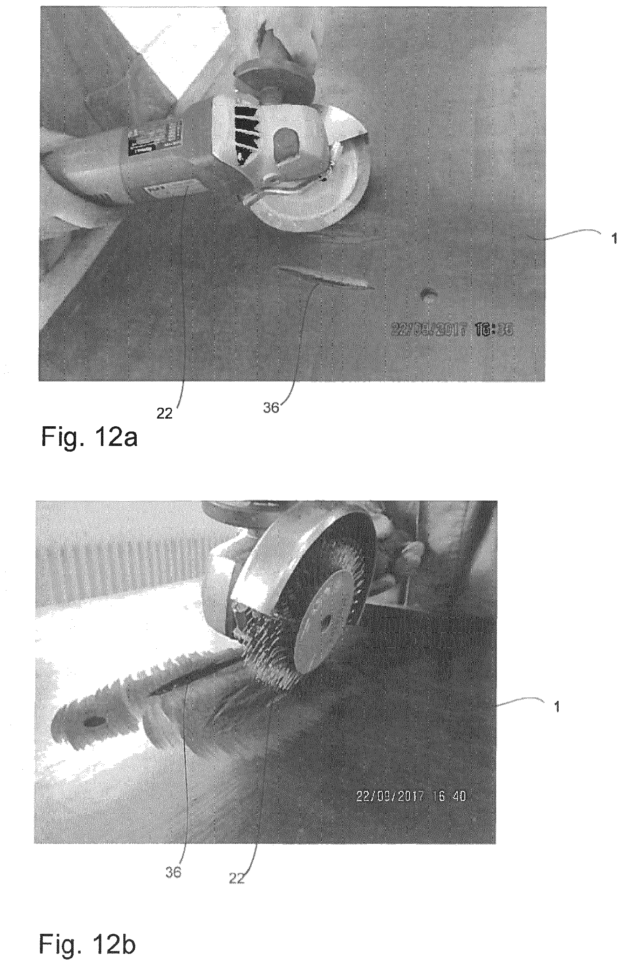

- Fig. 12a:: eine Aufsicht auf eine Schadstelle eines Transportbandes während des Anschrägens der Schadstellenkanten zur Vorbereitung deren Reparatur;
- Fig. 12b:: eine Aufsicht auf eine Schadstelle eines Transportbandes während der Oberflächenbehandlung zur Gewährleistung ausreichender Adhäsion des Klebers;

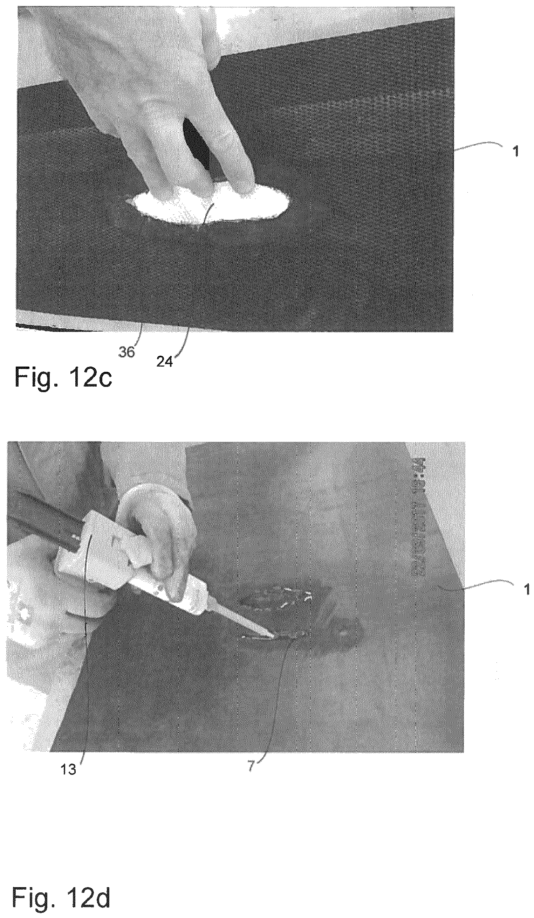

- Fig. 12c:: eine Ansicht auf eine Schadstelle eines Transportbandes mit eingelegter Textilarmierung;
- Fig. 12d:: eine Ansicht auf eine Schadstelle eines Transportbandes während des Einbringens des Klebers in die Schadstelle;

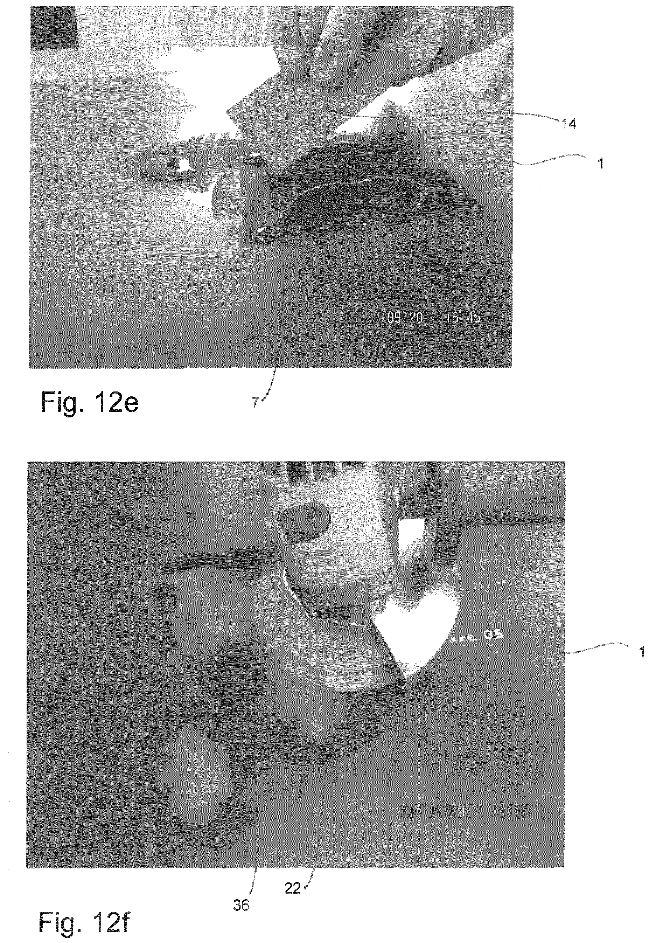

- Fig. 12e:: eine Aufsicht auf eine reparierte Schadstelle eines Transportbandes während des Aushärtens des Klebers;
- Fig. 12f:: eine Aufsicht auf eine reparierte Schadstelle eines Transportbandes während der mechanischen Nachbearbeitung;

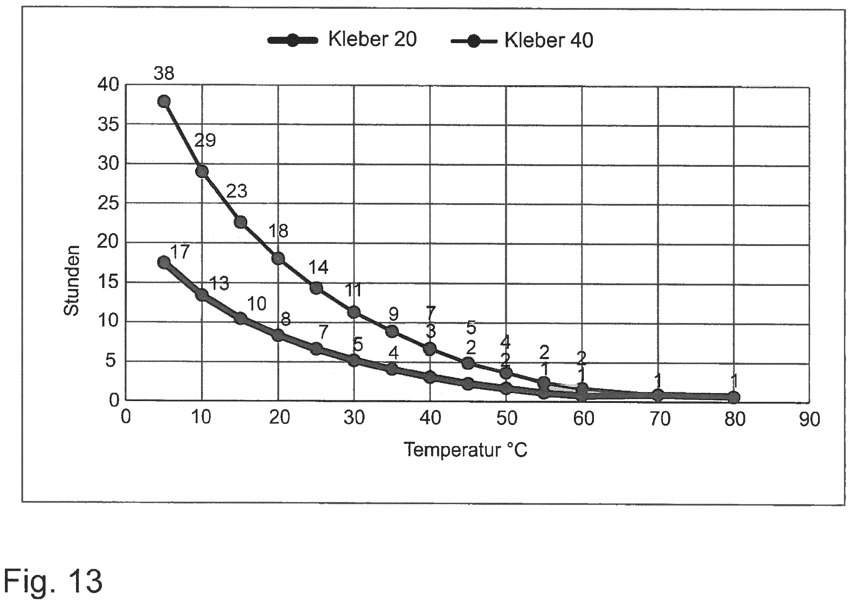

- Fig. 13:: einen beispielhaften Verlauf für den Zusammenhang zwischen der Temperatur und der empfohlenen Verarbeitungszeit.

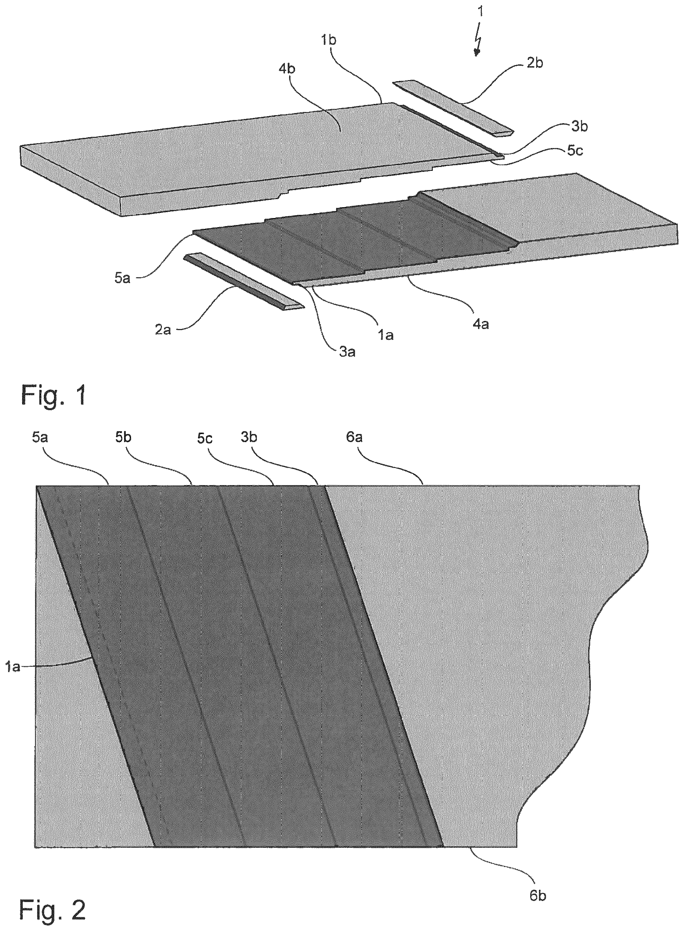

Figur 1 zeigt zwei komplementäre, zum Verbinden mittels eines hochfesten und dauerelastischen Klebstoffes vorbereitete Transportbandenden 1a, 1b. Diese sind so gegenüber einander angeordnet, dass sie einen möglichen Aufbau einer Verbindung zwischen zwei Transportbandenden 1a, 1b mittels eines wie oben beschriebenen hochfesten und dauerelastischen Klebstoffes darstellen. Bei den zu verklebenden Enden 1a, 1b des Transportbandes 1 kann es sich um die Enden desselben Transportbandes 1 oder verschiedener Transportbänder handeln. Der oben beschriebene Kleber ist somit geeignet, zum Beispiel (Gummi-) Transportbänder zu einem Endlosband zu verbinden oder auch ein solches Endlosband 1 aus mehreren gut handhabbaren Abschnitten von Transportbändern zusammenzustellen.

Wie Figur 1 zu entnehmen ist, sind neben den stufenförmigen Transportbandenden 1a, 1b auch Streifen 2a, 2b - hier mit trapezförmigen Querschnitt - vorgesehen, die eine entsprechende Stoßlücke 3a, 3b auf der äußeren Abdecklage 4a, 4b des Transportbandes 1 überbrücken können. Die oberste 5c beziehungsweise unterste Stufe bildende Streifen 5a des stufenförmigen Profils sind daher zu diesem Streifen 2a, 2b passend ausgebildet. Ebenso ist eine entsprechende Ausgestaltung der gegenüberliegenden äußeren (Ab-) Decklage 4a, 4b des Transportbandes 1 vorgesehen. Dadurch ragt der längste, eine Stufe bildende Streifen 5a, 5b über die längere der beiden äußeren Abdecklagen 4a, 4b des Transportbandes hinaus.

Figur 2 zeigt eine Aufsicht auf ein Stufenprofil eines zum Verbinden mittels eines hochfesten und dauerelastischen Klebstoffes vorbereiteten Transportbandendes 1. Wie dieser Aufsicht zu entnehmen ist, ist bevorzugt vorgesehen, dass die Stufen 5a, 5b, 5c sich nicht parallel zum Transportbandende 1a erstrecken, sondern gegenüber diesem in einem Winkel im Bereich >0° und <90° verlaufen. Aufgrund der parallel zueinander verlaufenden Seiten 6a, 6b des Transportbandes 1 und der dazu nicht im Winkel von 90° verlaufenden Stufenseiten bildet somit jede Stufe 5a, 5b, 5c eine Trapezform aus. Die trapezförmige Ausgestaltung der Stufen 5a, 5b, 5c hat den Vorteil, dass bei einer Zugbelastung der Verbindung, nicht gleichzeitig die gesamte Kontaktstelle zwischen zwei Stufen 5a, 5b, 5c zugbelastet wird, was das Reißen der Verbindung eventuell begünstigen könnte. Vielmehr wird zunächst ein Randbereich zugbelastet und erst anschließend weitere Bereiche der Kontaktstelle zwischen zwei Stufen 5a, 5b, 5c. Außerdem kann die Belastung der Verbindung durch andere Komponenten der Förderanlage (beispielsweise Transportrollen, Antriebsmittel, Umwerfer, Abstreifer) verringert werden, da jeweils nur Teile der Verbindung mit diesen Komponenten in Kontakt stehen.

Die einzelnen Stufen 5a, 5b, 5c können wie im gezeigten Beispiel jeweils dieselbe Breite aufweisen. Dies ist jedoch nicht zwingend erforderlich. Je nach Bedarf könnten auch Stufen 5a, 5b, 5c verschiedener Stufenbreite verwendet werden. Die könnte beispielsweise vorteilhaft sein, wenn die Gesamtlänge der Verbindung möglichst kurz sein soll. In diesem Fall könnten beanspruchtere Stufen 5a, 5b, 5c länger ausgebildet sein als weniger Zugbelastete.

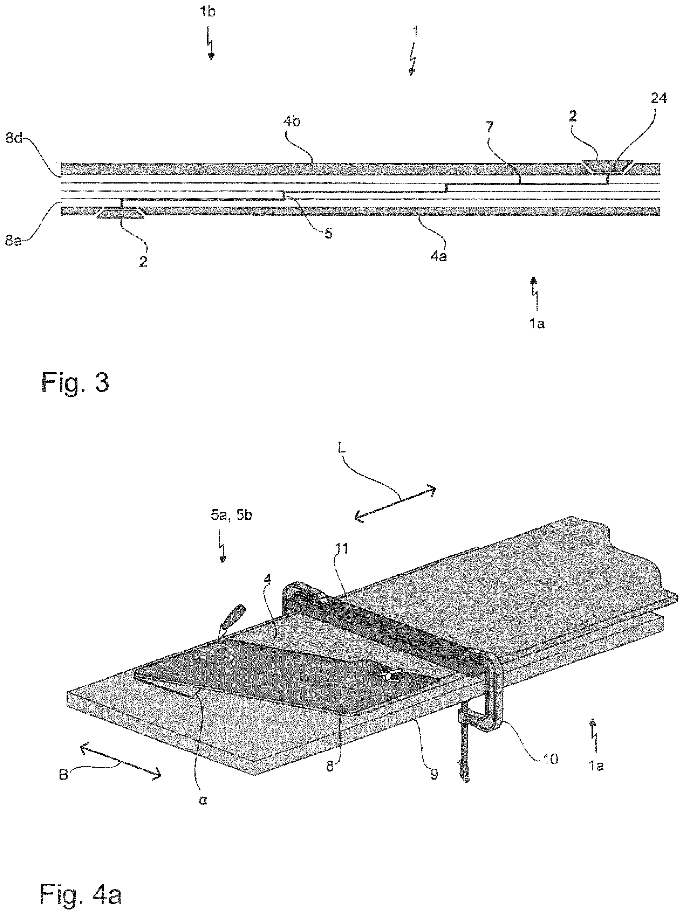

In Figur 3 ist eine Seitenansicht eines möglichen Aufbaus einer Verbindung zwischen zwei Transportbandenden 1a, 1b mittels eines hochfesten und dauerelastischen Klebstoffes 7 dargestellt. Erkennbar ist die Verklebung mittels eines wie oben beschriebenen Klebers 7 zwischen den Kontaktflächen der einzelnen Stufen 5a, 5b, 5c. Im gezeigten Beispiel besteht ein Band aus zwei Decklagen 4a, 4b und einem in 4 Ebenen oder Lagen 8a, 8b, 8c, 8d unterteilten Kern. Durch die 4 Ebenen oder Lagen 8a, 8b, 8c, 8d und das jeweilige Bandende 1a, 1b werden somit 3 Stufen 5a, 5b, 5c ausgebildet. Werden diese in komplementärer Weise zusammengefügt, bildet sich wieder ein in 4 Ebenen 8a, 8b, 8c, 8d unterteilter Kern. Die Länge der jeweiligen Verbindung und die Anzahl der Stufen 5a, 5b, 5c kann beispielsweise in Anlehnung an die DIN 22102 ausgewählt werden. Die Stoßlücken 3a, 3b zwischen den zwei jeweiligen Decklagen 4a, 4b werden jeweils durch einen Stoßlückenstreifen 2a, 2b überbrückt. Dieser kann ebenfalls mittels des oben beschriebenen Klebers 7 befestigt werden.

In den Figuren 4a - g sind einzelne Verfahrensschritte eines Verfahrens zum Verbinden von Transportbandenden 1a, 1b dargestellt. Figur 4a zeigt dabei exemplarisch an Transportbandende 1a, dass vor der Verklebung die zu verbindende Kontaktstelle zwischen den Transportbandenden 1a, 1b entsprechend vorbereitet wird. Insbesondere ist bevorzugt, dass die Transportbandenden 1a, 1b vor der Verklebung mit einem stufenförmigen Profil versehen werden. Die Stufenprofile der beiden zu verbindenden Transportbandenden 1a, 1b sind dabei so ausgeführt, dass sie bei Überlappung der Transportbandenden 1a, 1b in der Summe jeweils dieselbe Stärke ergeben. Durch eine derartige Ausführung wird einerseits verhindert, dass im Überlappungsbereich die Stärke des Transportbandes 1 in unerwünschter Weise zunimmt. Außerdem wird erreicht, dass die Kontaktfläche, die für die Verklebung zur Verfügung steht, vergrößert wird. Die ist für die Stabilität der Verbindung vorteilhaft. Wie oben in Figur 2 dargestellt ist, ist dabei bevorzugt, dass die Stufen 5a, 5b, 5c nicht senkrecht zur Längsrichtung L des Transportbandes 1 verlaufen, sondern bezüglich dieser Richtung in einem Winkel α zwischen beispielsweise 5° und 85°, bevorzugt zwischen 10° und 70°, besonders bevorzugt zwischen 15° und 55°, insbesondere bevorzugt zwischen 15° und 45°, verlaufen. Durch eine solche von der Breitenrichtung B des Bandes 1 abweichende Ausrichtung der einzelnen Stufen 5a, 5b, 5c kann erreicht werden, dass einerseits die Kontaktfläche weiter vergrößert wird, andererseits auch die in Längsrichtung L des Bandes 1 wirkende Zugbelastung nicht senkrecht zu der Stoßfläche der einzelnen Stufen 5a, 5b, 5c wirkt. Dadurch kann die Gefahr des Aufreißens der Verklebung und eine Beschädigung von anderen Anlagenkomponenten weiter minimiert werden.

Wie Figur 4a zu entnehmen ist, wird zunächst eines der Bandenden auf einer geeigneten Unterlage 9, wie beispielsweise einer planen Werkbank fixiert. Dies kann beispielsweise mittels Schraubzwingen 10 und optional durch geeignete Druckverteileinrichtungen 11 erfolgen. Anschließend werden die einzelnen Lagen 8 stufenweise zur Ausbildung der oben beschriebenen Stufen 5 abgetragen. Wie oben im Zusammenhang mit Figur 2 beschrieben wurde, jedoch auch Figur 4a gezeigt ist, weisen die jeweils abgetragenen Stufen 5 ein trapenzförmiges Profil auf. Sofern die einzelnen Lagen 8 auch eine (hier nicht dargestellte) Textillage umfassen, wird diese ebenfalls mit abgetragen. In Figur 4a ist dargestellt, wie die Stoßkanten der einzelnen Stufen 5 durch Einfügen eines Schnittes erzeugt werden. Die einzelnen Lagen 8, wie beispielsweise die Gummidecke 4 kann dann abgezogen werden. Gegebenenfalls muss dazu ein (nicht gezeigter) Gurthobel eingesetzt werden. Analog werden die weiteren Lagen abgezogen.

Die jeweils andere Gurtseite beziehungsweise das andere Transportbandende 1a, 1b muss analog vorbereitet werden. Dabei ist selbstverständlich zu beachten, dass der Winkel α bezüglich der Längsrichtung L des Bandes 1 sich so erstreckt, dass im Überlappungsfall die Stufen 5 sich parallel erstrecken und sich auf der gegenüberliegenden Seite befinden, sodass bei Überlappung der jeweiligen Enden 1a, 1b die Stufen 5 so ineinander greifen, dass sich die Stufen 5 und die Stoßflächen der beiden Bandenden 1a, 1b jeweils kontaktieren und in der Summe eine Bandhöhe ergeben, die der ursprünglichen Bandhöhe entspricht.

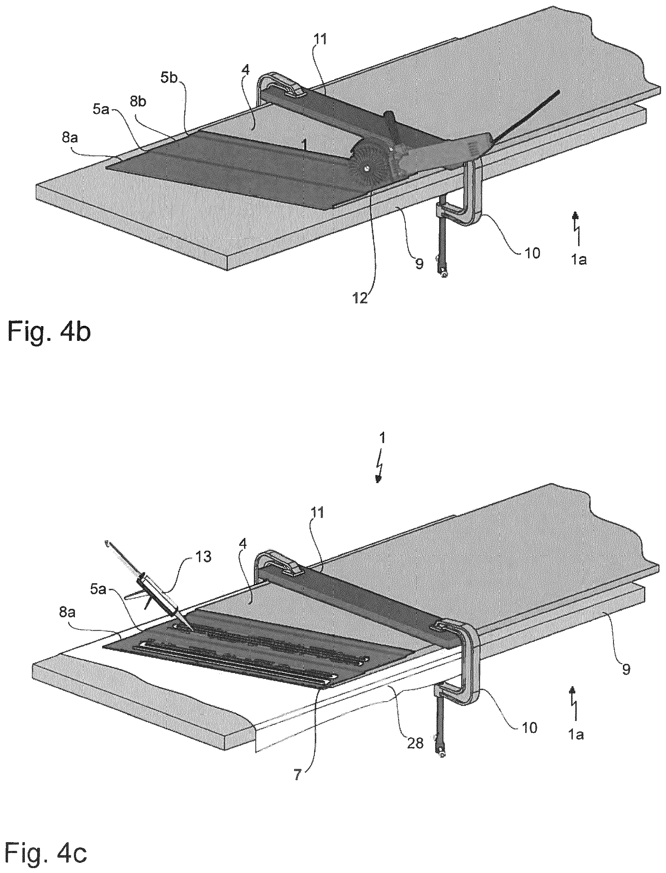

Nach diesen Vorbereitungen werden die Kontaktflächen beispielsweise mittels einer Drahtbürste 12 wie in Figur 4b gezeigt angeraut, um die Haftung des Klebers 7 und somit auch der Bandenden 1a, 1b miteinander zu verbessern. Bevorzugt erfolgt das Aufrauen quer zu der Transportrichtung. Anschließend kann - wie in Figur 4c gezeigt - der Kleber 7 aufgebracht werden. Dies kann beispielsweise mittels einer Kartuschenpistole 13 erfolgen. Zuvor empfiehlt es sich jedoch die Ausrichtung der zu verbindenden Transportbandenden 1a, 1b und die Maßhaltigkeit der Verbindung zu überprüfen sowie eine Schutzfolie 28 zwischen der Unterlage beziehungsweise Werkbank 9 und den zu verbindenden Transportbandenden 1a, 1b anzuordnen, insbesondere um deren Verschmutzung mit Kleber zu vermeiden. Nach dem Verkleben bietet der oben beschriebene Kleber 7 zwar im Gegensatz zu aus dem Stand der Technik bekannten Kontaktklebern noch die Möglichkeit die einzelnen Elemente gegenüber einander zu verschieben, aufgrund der bereits bestehenden Haftkraft und der in vielen Fällen ohnehin schwierigen Handhabbarkeit von langen und/oder breiten und/oder schweren Transportbändern 1 ist eine Korrektur der Position schwierig realisierbar und sollte möglichst vermieden werden.

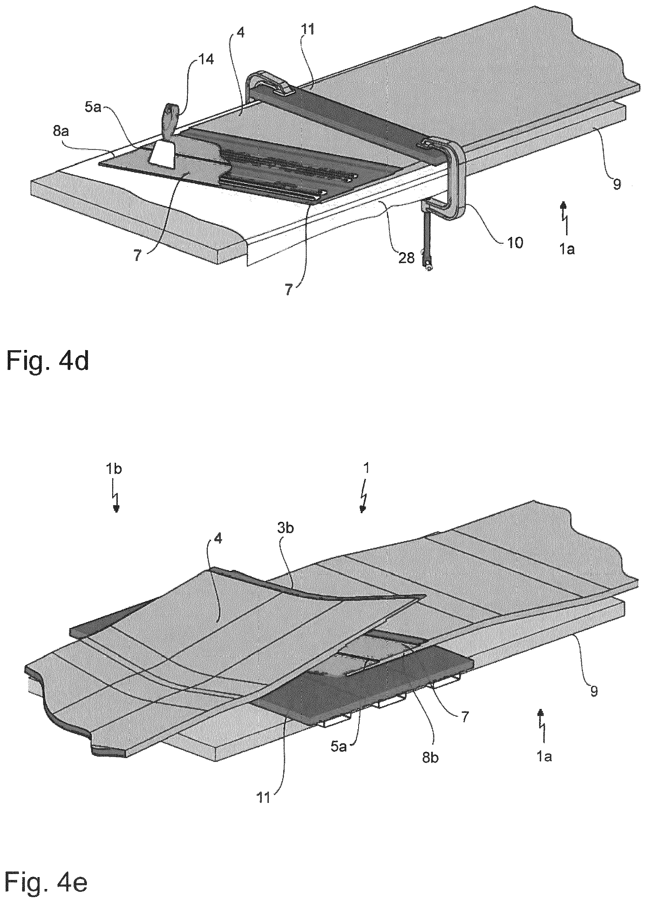

Um eine gleichmäßige Haftung zu erreichen, bietet es sich wie in Figur 4d dargestellt an, den Kleber 7 anschließend mit einem Spachtel 14 oder Pinsel zu verteilen. Dabei sollten möglichst alle Kontaktflächen vollständig, bevorzugt bis in Poren hinein, benetzt werden. Da der Kleber 7 sofort nach dem Auftragen auf die Kontaktflächen mit der Aushärtung beginnt, sollte die Zeit ab dem Auftrag gemessen werden. Je länger der Kleber 7 in diesem Stadium aushärten kann, desto höher ist die erreichbare Anfangshaftung. Im vorliegenden Beispiel wird eine optimale Anfangshaftung nach 7 bis 10 Minuten nach Auftragung des Klebers 7 erreicht. Eine längere Wartezeit erhöht die Anfangshaftung, was zwar Vorteile bringen kann, jedoch die Korrektur der Position der Bandenden 1a, 1b in folgenden Schritten erschwert.

Das gegenüberliegende (zu verbindende) Transportbandende 1a, 1b sollte ebenso vorbereitet sein.

Es bietet sich an, spätestens nach diesem Verfahrensschritt auch Vorbereitungen für eine spätere Fixierung und Druckbeaufschlagung der Klebestelle zu treffen. Beispielsweise könnten jetzt - wie in Figur 43 und den folgenden Figuren dargestellt - Teile einer Druckbeaufschlagungs- und/oder Fixiereinrichtung 10, 11 unter dem zu verbindenden Abschnitt des Transportbandes positioniert werden.

Es wäre weiterhin denkbar, bereits zu diesem Zeitpunkt das Stoßlückenband 2a auf der Seite einzubringen, die beispielsweise auf den Teilen einer Druckbeaufschlagungs- und/oder Fixiereinrichtung 10, 11 aufliegt, da diese später schwer zugänglich sein könnte.

Nach der für den jeweiligen Kleber 7 angegebenen Wartezeit und dem damit verbundenen Einstellen der gewünschten Anfangshaftung werden die Bandenden 1a, 1b wie in Figur 4e dargestellt zusammengefügt. Um eine gute Kontaktierung zu erreichen und beispielsweise das Ausbilden von Blasen an der Kontaktstelle zu vermeiden, bietet es sich an, die Verklebungsstelle beispielsweise mit einer Andrückrolle 15 beziehungsweise einem Rad von innen nach außen zu druckbeaufschlagen, um eventuelle Luftblasen nach außen auszutreiben. In diesem Zustand lässt sich im Unterschied zu aus dem Stand der Technik bekannten Kontaktklebern gegebenenfalls die Position der Bandenden 1a, 1b zueinander noch korrigieren, solange der Kleber 7 noch nicht zu fest ist.

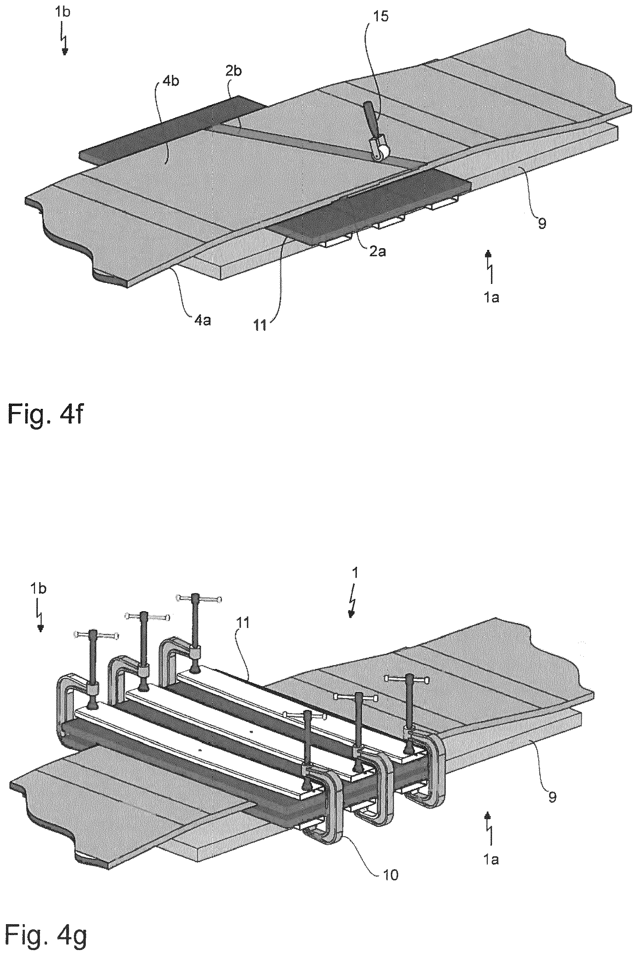

Um eine möglichst ebene Oberfläche der nun verbundenen Transportbandenden 1a, 1b im Bereich der Verbindungsstelle zu gewährleisten, ist es wie oben beschrieben vorteilhaft, ein sogenanntes Stoßlückenband 2a, 2b in die Decklage(n) 4a, 4b einzusetzen. Bevorzugt handelt es sich bei einem solchen Stoßlückenband 2a, 2b um ein Gummi- oder PU-Streifen mit oder ohne Textileinlage. Das Einsetzen und Andrücken eines oberen Stoßlückenband 2b in die obere Decklage ist in Figur 4f dargestellt. Spätestens jetzt sollte gegebenenfalls nochmals die gesamte Verbindungsfläche gegebenenfalls einschließlich des Stoßlückenbandes 2b von der Mitte aus kräftig angerollt werden, um jegliche Luftblase auszutreiben und eine ausreichend starke Kontaktierung der Verklebungsflächen miteinander zu gewährleisten.

Für die endgültige Aushärtung sollte die Verbindungsstelle in eine entsprechende Fixiervorrichtung 10, 11 eingespannt werden. Eine Druckbeaufschlagung mittels einer beispielhaften Fixiervorrichtung 10, 11 ist in Figur 4g gezeigt. Die Aushärtezeit bis zur sicheren (Hand- oder Handhabungs-) Festigkeit beträgt im vorliegenden Beispiel bei 23°C ca. 60 Minuten. Die jeweils benötigte Zeit ist jedoch von der Zusammensetzung des Klebers und der Temperatur abhängig. Anschließend sollte die Verbindung nochmals kontrolliert werden. Die Funktionsfestigkeit der Verbindungsstelle wird im vorliegenden Beispiel nach ca. drei bis vier Stunden erreicht. Nach dieser Zeit kann die Fixiervorrichtung 10, 11 entfernt werden und das Band gegebenenfalls nachbearbeitet werden. Die Nachbearbeitungsschritte können beispielsweise das Abschneiden oder Abschleifen von überstehenden Bandabschnitten umfassen. Durch dieses Verfahren kann eine dauerhafte Verbindung der Bandenden erreicht werden, ohne dass das Band in diesem Bereich eine größere Stärke als in übrigen Bereichen aufweisen muss. Das Band 1 ist nach wenigen Stunden einsatzfähig. Eine Vulkanisierung ist nicht notwendig. Somit kann das Verfahren autark und auch an schlecht zugänglichen Orten eingesetzt werden. Nach beispielsweise 8 Stunden kann ein so verbundenes Transportband 1 wieder mit maximaler Last genutzt werden.

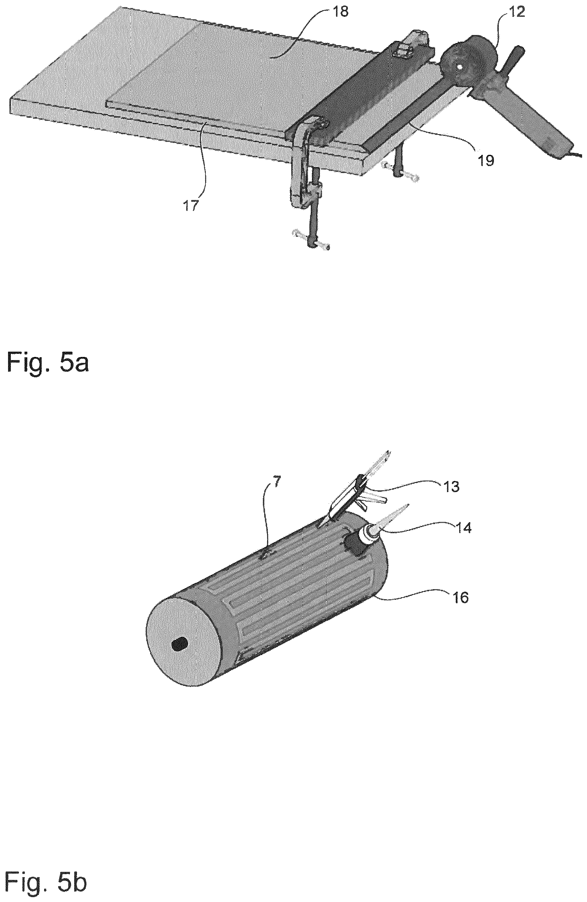

Ein großer Vorteil des oben beschriebenen Klebers 7 und des Verfahrens zur Anwendung dieses Klebers 7 ist, dass der Kleber nicht nur auf Gummi gut haftet, sondern auch auf anderen - auch nicht elastisch verformbaren - Materialien sehr gut haftet. Dadurch eignet sich der Kleber 7 auch zum Bekleben von beispielsweise Metalltrommeln 16 mit Gummiummantelungen 17. Ein Beispiel, wie dies erfolgen kann, ist den Figuren 5a - h dargestellt. Zunächst wird - wie in Figur 5a schematisch dargestellt ist - der vorgesehene Belag 17 an den Klebeflächen 18 und Schnittkanten 19 angeraut. Dies kann beispielsweise mit einem aus dem Stand der Technik bekannten Anrauer 12 oder einem Winkelschleifer erfolgen. Um eine möglichst gute Haftung des Klebers 7 auf den Klebeflächen 18 zu erreichen, sollten die Klebeflächen 18 vor dem Aufbringen des Klebers 7 gereinigt werden. Dies dient insbesondere dazu Fette und Öle, aber auch Späne und Staub, die beim Anrauen entstehen, zu entfernen. Bevorzugt erfolgt dies mittels eines Besens. Lösungsmittel sollten vermieden werden. Auch wenn dies in der Figur 5a nicht explizit gezeigt ist, sollte das Anrauen möglichst quer zur Zugrichtung erfolgen, um eine möglichst dauerhafte Verklebung zu erreichen.

Wenn der Belag wie oben beschrieben vorbereitet ist, wird zunächst der Kleber 7 - wie in Figur 5b schematisch dargestellt - mittels einer Kartuschenpistole 13 auf die Oberfläche der Trommel 16 aufgetragen. Der zunächst streifenförmig aufgetragene Kleber 7 wird anschließend mittels eines Pinsels, Spachtels 14 oder eines anderen geeigneten Werkzeugs gleichmäßig verteilt. Als vorteilhaft hat sich hier gezeigt, eine Klebermenge von ca. 100 bis 150 g/m² zu verwenden. Diese Menge kann in einem Anstrich aufgebracht werden. Ein zweiter Anstrich ist üblicherweise nicht notwendig. Es sollte darauf geachtet werden, dass die gesamte Oberfläche der zu beschichtenden Trommel 16 vollständig benetzt ist.

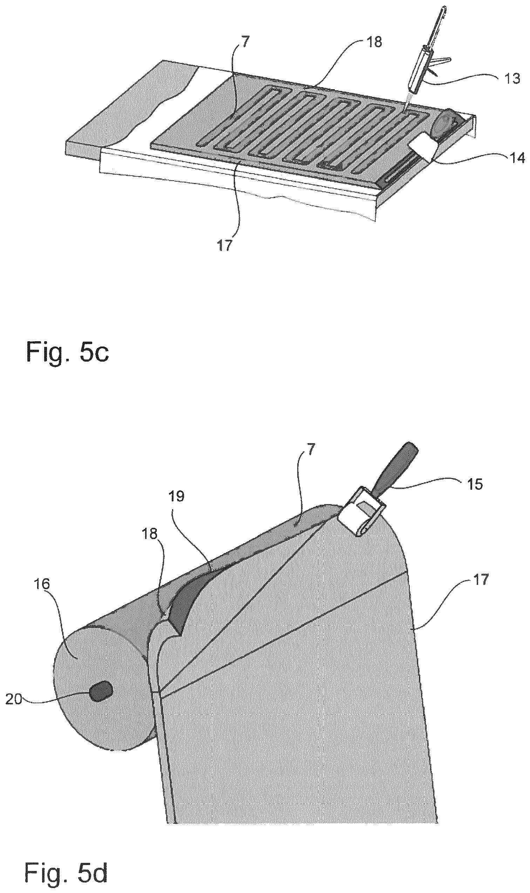

Da der Kleber 7 nach dem Aufbringen auf die Trommel 16 mit der Aushärtung beginnt, ist die Erfassung der Zeit ab dem Aufbringen wichtig. Eine lange Zeit zwischen Auftrag und Kontaktierung mit dem Belag 17 erhöht zwar die Anfangshaftung zwischen diesen Teilen 16, 17, jedoch wird die korrekte Ausrichtung bei zu großer Anfangshaftung erschwert. Daher sollte unmittelbar nach dem Aufbringen des Klebers 7 auf die Trommel 16 der Kleber 7 auch auf die innenliegende Oberfläche 18 des Belags 17 aufgebracht werden. Wie in Figur 5c schematisch dargestellt ist, wird dazu der Kleber 7 beispielsweise mittels einer Kartuschenpistole 13 auf diese Oberfläche 18 aufgetragen. Auch hier sollte der Kleber 7 mittels eines Spachtels 14, Pinsels oder ähnlichen Werkzeugs gleichmäßig verteilt werden. Die Oberfläche 18 des Belags 17 sollte möglichst vollständig benetzt sein.

Vor der Kontaktierung des Belags 17 mit der zu beschichtenden Trommel 16 sollte der Kleber 7 eine vorgegebene Zeit trocknen, um die benötigte Anfangshaftung zu erreichen. Je nach Zusammensetzung des Klebers 7 unterscheidet sich dieses Zeitintervall. Durch verschiedenen Zusammensetzungen verschiedener Kleber 7 können unterschiedliche Zeitintervalle eingestellt werden, die zur Vorbereitung der zu verklebenden Flächen 16, 18 zur Verfügung stehen. Insbesondere bei sehr großen Klebeflächen bietet es sich an, Kleber 7 zu verwenden, die länger verarbeitbar sind. Bei einer vorgegebenen Kleberzusammensetzung kann die Verarbeitungszeit durch eine Veränderung der Temperatur gesteuert werden. Ein beispielhafter Verlauf für den Zusammenhang zwischen der Temperatur und der empfohlenen Verarbeitungszeit ist in der Figur 13 gezeigt. Sollte ein solches Diagramm für den Kleber 7 einer vorgegebenen Zusammensetzung nicht zur Verfügung stehen, kann der günstigste Zeitpunkt für die Kontaktierung der entsprechend vorbereiteten Oberflächen 16, 18 mittels der sogenannten Fingerrückenmethode ermittelt werden. Dies bedeutet, dass bei Kontaktierung des Fingerrückens mit der Kleberoberfläche sich die Klebestelle trocken anfühlt und sich bei Entfernen des Fingerrückens keine Fäden zwischen Fingerrücken und zu verklebender Oberfläche 16, 18 bilden.

Ist der Kleber 7 ausreichend trocken, wird der Belag 17 wie in Figur 5d dargestellt auf die Trommel 16 aufgebracht. Dazu wird der Belag 17 an der Schnittkante 19 auf die Trommel 16 angelegt. Um eine möglichst gute Verklebung zwischen Trommel 16 und Belag 17 zu erreichen, sollte die Trommel 16 möglichst rotierbar gelagert sein. So kann vergleichsweise einfach die Schnittkante 19 parallel zur Trommellängsachse 20 angelegt werden und durch die Rotation der Trommel 16 der Belag 17 nach und nach mit der Trommeloberfläche kontaktiert werden. Während des Aufbringens des Belags 17 sollte dieser mittels einer geeigneten Rolle 15 von innen nach außen entlang der Trommellängsachse 20 angedrückt werden. Dazu hat sich eine Rolle 15 zur Druckbeaufschlagung als vorteilhaft erwiesen.

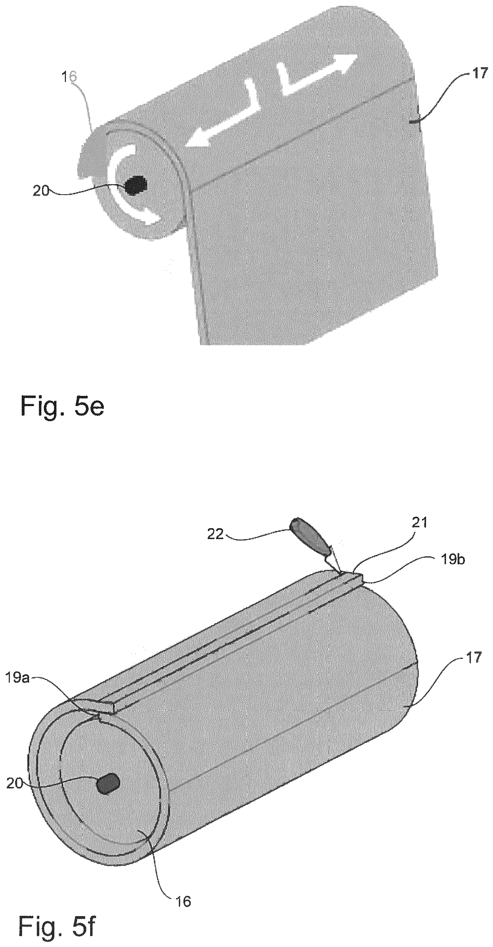

Anschließend wird wie in Figur 5e gezeigt die Trommel 16 weiter rotiert bis der Belag 17 vollständig auf der Trommeloberfläche aufliegt. Gegebenenfalls könnte der Belag 17 mit einem Gummihammer auf der Trommel 16 angeklopft werden. Lufteinschlüsse sollten vermieden werden und beispielsweise durch die oben beschriebene Rolle 15 seitlich herausgedrückt werden.

Um einen vollständigen Belag der Trommel 16 mit der Gummibeschichtung 17 zu erreichen, ist es oft notwendig, dass das aufzutragende Gummiband 17 etwas länger ist als der Umfang der Trommel 16. Dadurch ist gewährleistet, dass das eine Ende 19a des Belages 17 mit dem anderen Ende 19b des Belages17 zur Überlappung kommt. Dieser überlappende Abschnitt 21 wird anschließend wie in Figur 5f gezeigt entfernt. Beispielsweise könnte er mittels eines Messers 22 oder eines geeigneten Cutters abgeschnitten werden. Als insbesondere bevorzugt hat sich ein sogenannter stumpfer Stoß der Enden 19a, 19b erwiesen, bei dem die Verbindungsstellen leicht schräg nach innen und ca. 1 mm länger ausgeführt werden, um einen leichten Druck beim Verschließen zu verursachen.

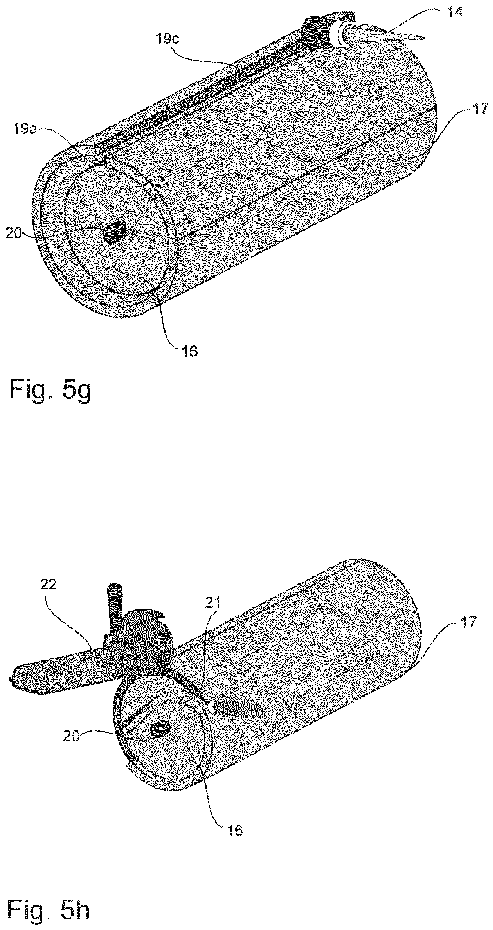

Wie in Figur 5g dargestellt, wird die erzeugte Schnittkante 19c idealerweise angeraut und Staub oder Abrieb mittels eines Besens, einer Bürste, Druckluft oder eines anderen geeigneten Werkzeugs 14 entfernt. Anschließend wird die Schnittkante 19c ebenfalls mit Kleber 7 versehen. Idealerweise handelt es sich bei diesem Kleber 7 um einen vom zuvor verwendeten Kleber 7 abweichenden Kleber 7 mit einer wesentlich kürzeren Aushärtezeit. So kann erreicht werden, dass der auf die nun eingebrachte Schnittkante 19c aufgebrachte Kleber 7 sehr schnell aushärtet und mit dem gegenüberliegenden Ende 19a des Gummibandes auf Stoß verklebt werden kann. Anschließend wird bevorzugt der Belag 17 nochmals mit einer (hier nicht gezeigten) Rolle 15 entlang der Längsachse 20 der Trommel 16 angedrückt. Dabei sollte jeweils etwa in der Mitte der Trommel 16 begonnen werden und in Richtung der Enden der Trommel 16 Luft nach außen herausgedrückt werden. Gegebenenfalls kann der Stoß 19a, 19c mit einer Riffelrolle angedrückt oder mit einem Gummihammer angeklopft werden, um eine bessere Haftung zu erreichen.

Anschließend sollte bis zur vollständigen Aushärtung des Klebers 7 der Belag 17 an die Trommel 16 angedrückt werden. Dies könnte beispielsweise mittels (nicht gezeigter) Gurte erfolgen. Als besonders geeignet hat sich das Umwickeln mit einer Stretchfolie erwiesen. Nach vollständiger Aushärtung und Erreichen der Funktionsfestigkeit sollten - wie beispielsweise in Figur 5h gezeigt - überstehende Kanten 21 mittels eines Messers, einer Säge, eines Winkelschleifers oder eines anderen geeigneten Werkzeugs 22 abgeschnitten werden. Der Stoß zwischen den beiden Enden des 19a, 19c Belags 17 kann falls notwendig egalisiert werden. Dazu könnte beispielsweise ein Winkelschleifer 22 eingesetzt werden.

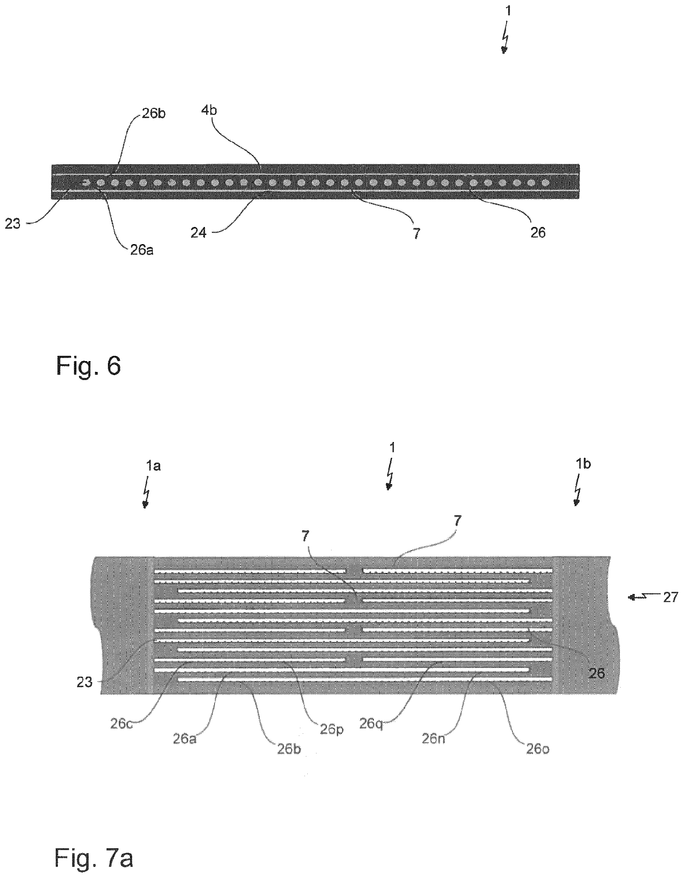

Figur 6 zeigt eine schematische Querschnittsdarstellung einer Verbindungsstelle eines mit Stahlseilgurten 23 verstärkten Transportbandes 1. Derartige Transportbänder 1 kommen häufig dort vor, wo schwere Lasten transportiert und/oder Lasten über große Strecken transportiert werden sollen. Da die dabei auftretenden Zugbelastungen oft nicht durch Gummibahnen alleine abzutragen sind, werden üblicherweise Verstärkungen wie beispielsweise Stahlseile 23 in derartige Transportbänder 1 eingearbeitet. Zusätzlich kann gegebenenfalls eine Textilarmierung 24 vorgesehen sein. Dadurch wird jedoch deren Handhabung unter anderem aufgrund des zusätzlichen Raumgewichts, der größeren Steifigkeit erschwert. Daher ist insbesondere bei derartigen Transportbändern 1 eine schnelle und leicht zu realisierende Verbindung von Transportbandenden 1a, 1b ohne den Einsatz von schwerem Gerät - beispielsweise bei einem Riss - gewünscht.

In der in Figur 6 gezeigten Querschnittsdarstellung einer Verbindungsstelle ist eine Vielzahl von Verstärkungselementen 23, hier Stahlseilgurte 23, gezeigt. Diese können - wie unten im Zusammenhang mit den Figuren 7a - c beschrieben ist - mit verschiedenen Enden 1a, 1b des Transportbands 1 verbunden sein. Üblicherweise bildet jeweils eines dieser Verstärkungselemente 23 zusammen mit dem diese umgebende Material 25, insbesondere des umgebenden Gummimaterials, einen sogenannten Finger 26a aus, welcher mit den benachbarten Fingern 26b, 26c (welche beispielsweise dem anderen Transportbandende 1a, 1b zugeordnet sind) durch den oben beschriebenen Kleber 7 verklebt ist. Möglichkeiten wie diese Finger 26a, 26b, 26c ineinandergreifen um eine ausreichende Stabilität zu gewährleisten ist in den Figuren 7a - c dargestellt und im Folgenden beschrieben:
Die Figuren 7a - c zeigen schematische Darstellungen verschiedener Varianten möglicher Verbindungen von Enden 1a, 1b eines mit Stahlseilgurten 23 verstärkten Transportbandes 1. Die jeweils dargestellten Verbindungstypen unterscheiden sich in der Überlappung von benachbarten Fingern 26a, 26b, 26c und in der Länge einzelner Finger 26a, 26b, 26c.

Figur 7a zeigt eine 2-stufige Gurtverbindung. Eine solche ist für die meisten Verbindungen ausreichend stabil und flexibel. Bei dieser Art der Verbindung werden drei verschiedene Fingertypen 26a, 26b, 26c miteinander verklebt. Bei den drei verschiedenen Fingertypen 26a, 26b, 26c handelt es sich um einen Finger 26n voller Fingerlänge (L_{S1/1}) ausgehend vom ersten Transportbandende 1a, einen Finger 26o voller Fingerlänge (L_{S1/1}) ausgehend vom zweiten Transportbandende 1b und Finger 26p, 26q halber Fingerlänge (L_{S1/2}) ausgehend vom ersten oder zweiten Transportbandende. Dabei ist vorgesehen, dass einem Finger 26n voller Fingerlänge ausgehend vom ersten Transportbandende 1a am zweiten Transportbandende 1b eine Lücke zwischen zwei Fingern 26o, 26q gegenüber liegt. Entsprechen liegt einem Finger 26o voller Fingerlänge ausgehend vom zweiten Transportbandende 1b eine Lücke am ersten Transportbandende 1a gegenüber. Fingern 26p, 26q halber Fingerlänge liegt auf dem gegenüberliegenden Transportbandende 1a, 1b ebenfalls ein Finger 26p, 26q halber Fingerlänge gegenüber. Kombinationen aus Fingern 26p, 26q oder Fingern 26n, 26o und Lücken, die eine volle Fingerlänge (L_{S1/1}) ergeben, werden als Fingerpaar 27 bezeichnet. Bei jedem Fingerpaar 27 ist somit gewährleistet, dass die Summe der sich ausgehend von beiden Transportbandenden 1a, 1b gegenüberliegenden Fingerlängen (Lₛₙ) jeweils eine volle Fingerlänge (L_{S1/1}) ergibt.

Die Anordnung dieser Finger 26 beziehungsweise Fingerpaare 27 kann bei der zweistufigen Verbindung beispielsweise die in Figur 7a gezeigte sein. Dabei folgt einem Finger 26n voller Fingerlänge ausgehend vom ersten Transportbandende 1a ein Finger 26o voller Fingerlänge ausgehend vom zweiten Transportbandende 1b und diesem eine Kombination zweier Finger 26p, 26q halber Fingerlänge ausgehend von beiden Transportbandenden 1a, 1b. Auf jede Abfolge dieser drei Fingerpaare 27 schließt sich ein identisches Tripple dieser Fingerpaare 27 an.

Alternativ dazu ist denkbar, dass auf jeweils ein Fingerpaar 27 mit einem Finger 26n, 26o voller Fingerlänge ein Fingerpaar 27 aus Fingern 26p, 26q halber Fingerlänge folgt. Somit würde sich an jedes Quartett von Fingerpaaren 27 ein identisches Quartett von Fingerpaaren 27 anschließen.

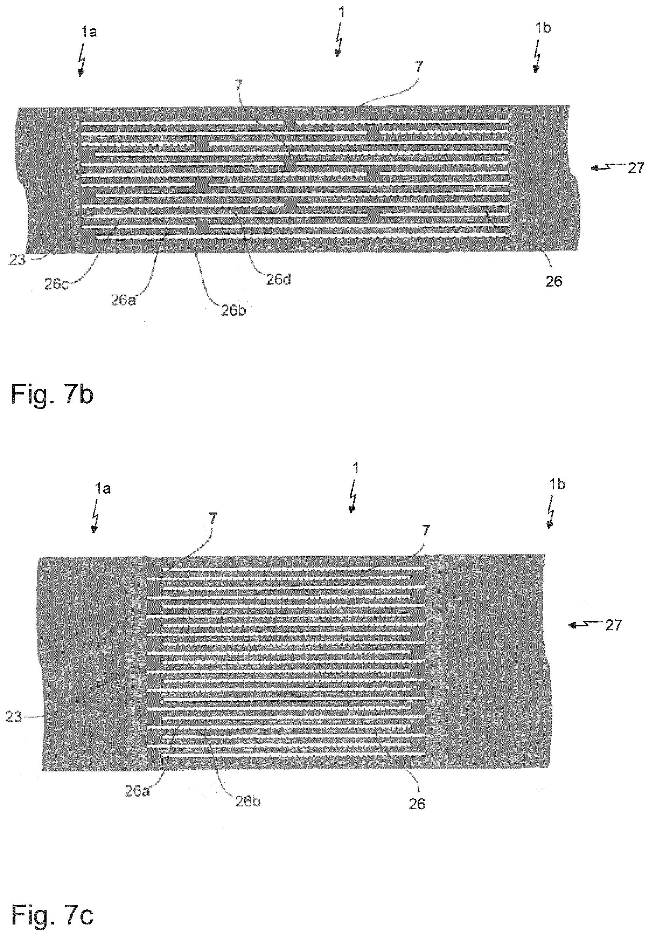

In Figur 7b ist eine beispielhafte dreistufige Gurtverbindung dargestellt. Wie bei der oben beschriebenen zweistufigen Verbindung besteht auch hier jedes Fingerpaar 27 aus einer Kombinationen von Fingern 26 oder Fingern 26 und Lücken, die eine volle Fingerlänge (L_{S1/1}) ergeben. Jedoch ist bei der dreistufigen Gurtverbindung vorgesehen, dass nicht alle Finger 26, die nicht eine volle Fingerlänge (L_{S1/1}) aufweisen genau die halbe Fingerlänge (L_{S1/2}) aufweisen müssen. Vielmehr ist vorgesehen, dass es neben Fingern voller Fingerlänge (L_{S1/1}) und Fingern halber Fingerlänge (L_{S1/1}) auch Finger anderer Längen gibt, beispielsweise 1/3-Fingerlänge (L_{S1/3}) und 2/3-Fingerlänge (L_{S2/3}).

Die Anordnung der Fingerpaare 27 nebeneinander - also in Breitenrichtung des Transportbandes 1 - kann je nach Anforderungen verschieden sein. Die in Figur 7b dargestellte Ausführungsform ist lediglich ein mögliches Beispiel. Anders als bei der gezeigten Darstellung ist es nämlich beispielsweise auch möglich, dass ausgehend von beiden Transportbandenden 1a, 1b Finger 26 voller Fingerlänge ausgehen können (in Fig. 7b sind nur Finger voller Fingerlänge ausgehend vom rechten Transportbandende dargestellt). Durch die bei dieser Art der Verbindung mögliche Variation der Kontaktstelle zwischen Fingern 26 eines Fingerpaares 27 ist es möglich, die Schwachstellen einer solchen Verbindung in Breitenrichtung des Bandes 1 möglichst weit voneinander zu beabstanden. Während sich bei der in Figur 7a dargestellten Ausführungsform eine Unterbrechung nach jedem dritten Finger 26 widerholt, beträgt bei der in Figur 7b dargestellten Ausführungsform der Abstand bereits vier Finger 26. Mit der oben beschriebenen Variante der auch vom anderen Transportbandende 1a ausgehenden Finger 26n voller Fingerlänge wäre bei der dreistufigen Gurtverbindung eine Wiederholung einer Unterbrechung nach einer Folge von fünf Fingern 26 in Breitenrichtung realisierbar.

Eine besonders einfach zu realisierende Verbindung, die oft bereits die notwendige Verbindungsstärke aufweist, bietet die in Figur 7c dargestellte einstufige Gurtverbindung. Bei dieser Variante wechseln sich Finger 26 voller Fingerlänge jeweils ausgehend von den gegenüberliegenden Transportbandenden 1a, 1b ab. Bei dieser Variante besteht daher eine Wiederholung einer Unterbrechung bereits bei jedem zweiten Finger 26 in Breitenrichtung. Dennoch ist auch eine solche Verbindung in den Meisten Fällen bereits ausreichend stabil.

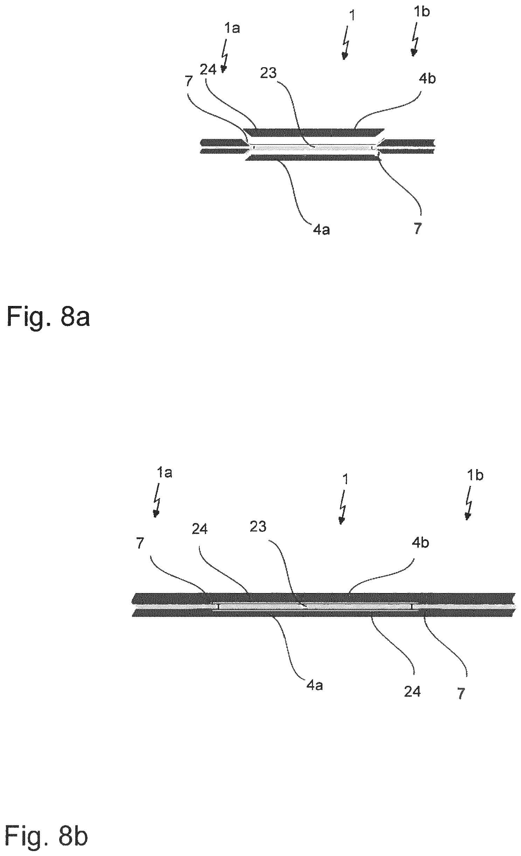

In den Figuren 8a und b sind schematische Querschnittsdarstellungen zu verbindender bzw. verbundener Enden 1a, 1b eines mit Stahlseilgurten 23 verstärkten Transportbandes 1 gezeigt. Während der Kern, welcher durch die die Stahlseile 23 umfassenden Finger 26 gebildet wird, in Figur 8a bereits verklebt ist, ist dieser Figur zu entnehmen, wie die Decklage 4a, 4b aufgebracht wird. Diese kann mit oder ohne eine Textilarmierung 24 erfolgen. Damit die Decklage 4a, 4b möglichst passgenau in die Verbindungsstelle eingesetzt werden kann, sind die Enden der Verbindungsstelle abgeschrägt, bevorzugt von außen nach innen verlaufend. Dies ermöglicht außerdem eine vereinfachte Handhabung. Die Decklage 4a, 4b im Bereich der Verbindungsstelle kann auf den Kern analog dem in im Zusammenhang mit Figur 4f beschriebenen Stoßlückenstreifen 2a, 2b aufgebracht werden. Optional kann eine Textilarmierung 24 (ein- oder beidseitig) zwischen Kern und Decklage 4a, 4b angeordnet werden. Die fertige Verbindung zwischen den Transportbandenden 1a, 1b mit aufgebrachter Decklage 4a, 4b und Textilarmierung 24 ist in Figur 8b gezeigt.

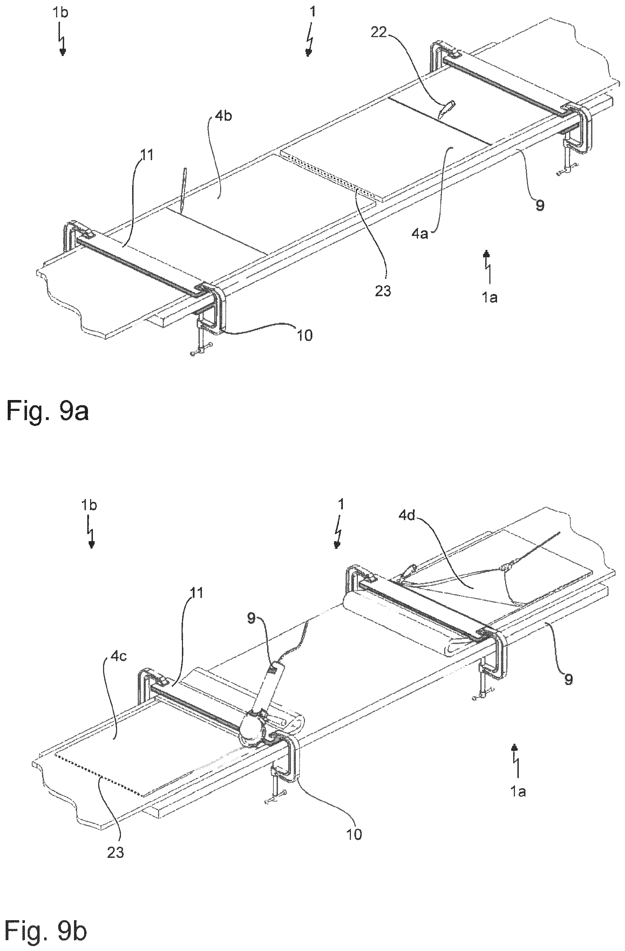

Die Figuren 9a - 9g stellen schematisch ein beispielhaftes Verfahren zur Verbindung zweier Transportbandenden 1a, 1b von mit Stahlseilgurten 23 verstärkten Transportbändern 1 dar. Dabei zeigt Figur 9a eine schematische Darstellung eines Verfahrensschritts zum Vorbereiten zu verbindender Enden 1a, 1b von mit Stahlseilgurten 23 verstärkten Transportbändern. Dazu werden die zu verbindenden Gurtenden 1a, 1b zunächst fixiert und dazu beispielsweise auf eine untere Fixiervorrichtung oder plane Werkbank 9 abgelegt und beispielsweise mit Kanthölzern und/oder Gurtspannern oder anderem geeigneten Werkzeug 10, 11 fixiert. Dabei sollte ein genügend großer Abstand eingehalten werden, um beide Bandseiten umschlagen zu können. Anschließend sollte das Band zur Ausbildung einer geraden Stoßkannte gekürzt werden. Bevorzugt wird die Stoßkante im Winkel von 90° zur Längsrichtung des Bandes ausgerichtet. Andere Winkel sind jedoch ebenfalls möglich und könnten (wie oben bezüglich nicht mit Stahlseilen verstärkter Bänder beschrieben) eine günstigere Verteilung der Zuglast auf die Verbindungsstelle bewirken. Ausgehend von dem Bandende 1a, 1b wird nun die gewünschte Verbindungslänge markiert. Die Verbindungslänge könnte beispielsweise in Anlehnung an DIN 22131 oder ISO 15236 Teil 4 ausgewählt werden. Die Verbindungslänge und gegebenenfalls der Winkel (90° oder im Fall von trapezförmiger Verbindung davon abweichend (siehe oben)) werden auf der auf Banddecke 4 markiert. Anschließend wird die Banddecke 4 mit einem geeigneten Werkzeug, beispielsweise einem Messer oder Cutter 22 sorgfältig angeschnitten. Dabei ist zu beachten, dass der die Stahlseile 23 enthaltene Kern möglichst nicht angeschnitten wird, um eine möglichst starke Verbindung der Finger 26 (nicht gezeigt) mit dem verbleibenden Bandende 1a, 1b beizubehalten.

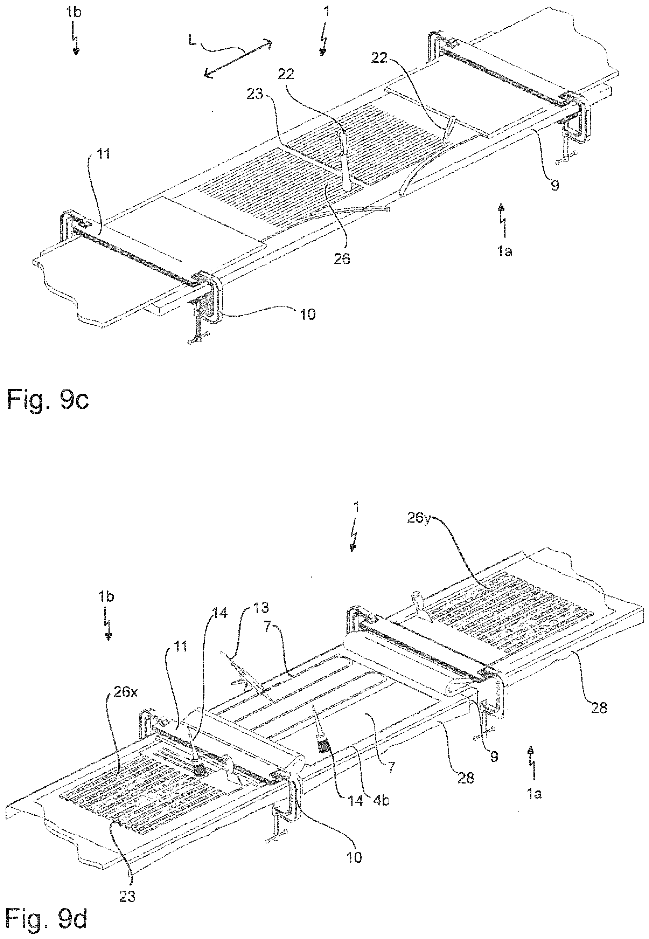

Figur 9b zeigt eine schematische Darstellung eines weiteren Verfahrensschritts zum Vorbereiten zu verbindender Enden 1a, 1b von mit Stahlseilgurten 23 verstärkten Transportbändern 1. Im gezeigten Beispiel sind die (bezüglich der Längsrichtung des Bandes seitlich angeordneten) Bandkanten 6a, 6b im Bereich der Verbindung abgeschnitten worden. Dies ist nicht zwingend erforderlich. Da diese Bereiche jedoch üblicherweise keine Verstärkungsgurte 23 enthalten, sind diese zum (Wieder-) Aufbau des Kerns im Bereich der Verbindung nicht notwendig und könnten in folgenden Verfahrensschritten stören. Daher wird die Entfernung empfohlen. Anschließend werden die Decklagen 4c, 4d von den markierten Bandenden 1a, 1b abgezogen. In Figur 9b ist lediglich das abziehen einer Decklage 4a, 4b pro Bandende 1a, 1b gezeigt, jedoch muss auch die gegenüberliegende Decklage 4c, 4d jeweils entfernt werden. Dass die Decklage 4a, 4b auch auf der in Figur 9b nicht dargestellten Seite entfernt ist, ist beispielsweise in Figur 9c zu erkennen. Die beim Entfernen der Decklage 4a, 4b, 4c, 4d entstehenden Kanten am Übergang zu dem nicht behandelten Transportbandabschnitt werden anschließend mit einem flachen Winkel von beispielsweise 5° - 45° bevorzugt 10° - 35°, besonders bevorzugt 20° - 30° abgeschliffen. Eine solche Schräge ermöglicht später eine gute Haftung der Decklage 4a, 4b, 4c, 4d auch in diesem Bereich, da eine vergleichsweise große Überlappung von neu aufgebrachten Decklage 4a, 4b, 4c, 4d und bestehendem Transportbandabschnitt erzielt werden kann.

Aufgrund des üblicherweise bei derartigen Transportbändern 1 auftretenden Gewichts ist der Einsatz maschineller Hilfsmittel wie beispielsweise eines Krans oder einer Seilwinde empfehlenswert. Weiterhin wird zur Verwendung eines Messers und/oder eines elektrischen (beziehungsweise in kritischer Umgebung - beispielsweise unter Tage - eines pneumatischen) Gurthobels 22 empfohlen.

Figur 9c zeigt eine schematische Darstellung eines Verfahrensschritts zum Ausbilden von miteinander verbindbarer Finger 26 an zu verbindenden Enden 1a, 1b von mit Stahlseilgurten 23 verstärkten Transportbändern 1. Dazu werden die freigelegten Kerne beider Transportbandenden 1a, 1b in Längsrichtung L des Transportbandes 1 durchtrennt. Bevorzugt erfolgt das Schneiden mittels eines Messers, einer Säge, eines Cutters oder eines anderen geeigneten Werkzeuges 22. Versuche haben gezeigt, dass Schnitte senkrecht zur Transportbandoberfläche (genauer also entlang einer Ebene, die sich entlang der Transportrichtung senkrecht zur Breitenrichtung des Transportbandes erstreckt) nicht nur besonders einfach zu realisieren sind, sondern auch eine besonders dauerhafte Verklebung der Finger 26 ermöglichen. Sechseckige oder achteckige Querschnitte von Fingern 26 haben sich als weniger bevorzugt herausgestellt. Bevorzugt weisen alle Längsschnitte denselben Abstand zu jedem benachbarten Längsschnitt auf.

Nach dem Ausbilden der Finger 26 werden einzelne Finger 26x₍₂ₙ₋₁₎, 26y₍₂ₙ₎ entfernt oder gekürzt, um Fingerpaare 27 auszubilden, die jeweils die volle Länge eines Fingers 26 aufweisen. Wurden wie oben beschrieben alle Längsschnitte im selben Abstand zu jedem benachbarten Längsschnitt eingebracht, haben alle Finger 26 dieselbe Breite, so dass sie besonders gut ineinandergreifen können und dicht aneinander anliegen.

Zunächst ist jedoch bevorzugt, dass die nun ausgebildeten Finger 26 auf den verbliebenen Teil des jeweiligen Transportbandes 1 zurückgeschlagen werden und an die Stelle der Verbindung die untere Decklage 4b positioniert wird. Dazu empfiehlt es sich, zunächst eine Schutzschicht 28, beispielsweise eine Glasfaserverstärkte PTFE-Folie oder Silikonfolie auf die Fixiereinrichtung zu platzieren, auf der dann die Decklage positioniert wird. Die Schutzschicht ist bevorzugt etwas länger und breiter als die geplante Verbindung. Als bevorzugt hat sich ein Überlapp auf mindestens zwei gegenüberliegenden Seiten, bevorzugt auf allen vier Seiten von etwa 10 - 30 cm, bevorzugt etwa 20 cm erwiesen. Ist die Schutzschicht 28 größer als die geplante Verbindungsstelle, lässt sich die untere Decklage 4b weiterhin auf dieser Schutzschicht verschieben und exakt so positionieren, dass später die Finger 26 beziehungsweise Fingerpaare 27 auf ihr angeordnet und verklebt werden können. Neben dem unten beschriebenen Nutzen der Schutzschicht 28 für die Fixierung der Verbindungsstelle in Breitenrichtung des Transportbandes dient die Schutzschicht 28 insbesondere dazu, ein Haften des Klebers 7 auf der Fixiereinrichtung 10, 11 zu vermeiden.

Die Decklage 4b, die bevorzugt Überstände für eine Überlappung mit den verbliebenen Transportbandabschnitten aufweist, wird nun auf die Schutzschicht 28 gelegt und so ausgerichtet, dass die Finger 26 auf ihr angeordnet und verklebt werden können. Falls gewünscht wird eine Textilarmierung 24 auf die der Schutzschicht 28 abgewandte (also später den Fingern zugewandte) Seite der Decklage 4b gelegt. Ist eine Textilarmierung 24 vorgesehen, ist diese bevorzugt so elastisch, dass der dadurch das Transportband 1 nicht zusätzlich versteift wird, so das Band 1 um enge Radien umgelenkt werden kann und somit der minimale Trommeldurchmesser beibehalten werden kann.

Zur Vorbereitung der Verklebung sollten alle Kontaktflächen an allen Seiten angeraut werden. Dazu empfiehlt sich die Verwendung einer Aufrau-Rundbürste oder einer Metallrundbürste. Auch die als Decklagen 4 vorgesehenen Gummiplatten (mit der optionalen Textilarmierung 24) sollten bevorzugt angeraut werden. Der entstehende Staub sollte mit einer sauberen Bürste, Druckluft oder einem anderen geeigneten Werkzeug 22 entfernt werden. Von chemischen Reinigern und Lösungsmitteln wird abgeraten. Nach der Reinigung der Oberflächen sollten alle Flächen vor Neuverschmutzungen geschützt werden.

Anschließend kann wie in Figur 9d dargestellt das Aufbringen des Klebers 7 auf Oberflächen der miteinander zu verbindenden Enden 1a, 1b von mit Stahlseilgurten 23 verstärkten Transportbändern 1 erfolgen. Dazu wird der Kleber 7 möglichst schnell auf sämtliche Kontaktflächen aufgetragen und anschließend mit einem geeigneten Werkzeug, beispielsweise einem Spachtel oder Pinsel 14 gleichmäßig verteilt. Ein Pinsel 14 bietet sich besonders an, da der Kleber 7 auch in Poren eingerieben werden sollte. Auch die Seitenflächen der Finger 26 müssen mit Kleber 7 beaufschlagt werden, um eine dauerhafte Verbindung zwischen benachbarten Fingern 26 gewährleisten zu können. Wie oben erwähnt, sollte das Aufbringen des Klebers 7 möglichst schnell erfolgen. Da bei einer derartigen Verbindung die gesamte mit Kleber 7 zu beaufschlagende Oberfläche sehr groß ist und der Kleber 7 im statischen Mischer 13 bereits nach kürzester Zeit auszuhärten beginnt, kann nur bei einer Vollständigen Beaufschlagung innerhalb der Hälfte der für den jeweiligen Kleber 7 angegebenen Topfzeit eine ausreichende Haftung an den beaufschlagen Oberflächen gewährleistet werden. Die benötigte Klebermenge hängt insbesondere von der Größe der Lücken zwischen benachbarten Fingern 26 ab. Mindestens sollte jedoch eine Menge von 1.000 g/m² verwendet werden. Nach dem vollständigen Aufbringen des Klebers 7 muss die Zeit erfasst werden. Aufgrund der Komplexität der beschriebenen Fingerverbindung vergeht üblicherweise bereits ein Großteil der Zeit, während der der Kleber 7 verarbeitbar ist, mit dem Auftragen und Verteilen des Klebers 7. Längere Verarbeitungszeiten würden zwar die Anfangshaftung erhöhen, jedoch darf die maximale Verarbeitungszeit nicht überschritten werden.

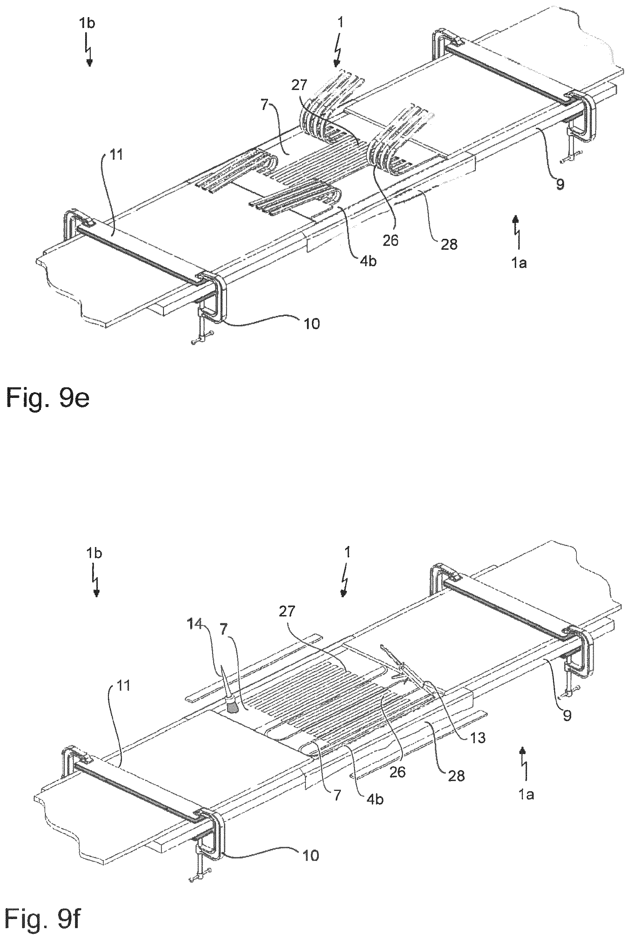

Figur 9e zeigt schematisch einen Verfahrensschritt zum Verkleben von Fingern 26 von miteinander zu verbindenden Enden 1a, 1b von mit Stahlseilgurten 23 verstärkten Transportbändern 1. Dazu werden die Finger 26 beider Gurtseiten 1a, 1b bevorzugt beginnend mit den inneren (also den am weitesten von den Bandbreitseiten entfernten) Fingern zurückgeklappt, so dass sie auf der vorbereiteten Decklage 4b zu liegen kommen. Bei Fingern 26 mit rechteckigem Querschnitt können diese direkt miteinander verklebt werden. Bei Fingern 26 mit Sechskantschnitt oder Lücken zwischen benachbarten Fingern muss Füllmaterial zwischen den Fingern eingebracht werden und deutlich mehr Kleber verwendet werden.

Sind die Finger 26 wie oben beschrieben auf einer (ersten) Decklage 4b fixiert, wird wie in Figur 9f gezeigt Kleber 7 auf die miteinander verbundener Finger 26 von mit Stahlseilgurten 23 verstärkten Transportbändern 1 aufgebracht um eine zweite Decklage 4a auf der der ersten Decklage 4b gegenüberliegenden Seite der miteinander verbundenen Finger 26 aufzubringen. Dazu wird der Kleber 7 (bevorzugt mit einer Menge im Bereich von 200 - 2000 g/m², bevorzugt im Bereich von 300 - 1000 g/m² je nach Webdichte des Textilgewebes und Abstand zwischen benachbarten Fingern 26) bevorzugt mit einer Kartuschen-Pistole 13 auf die Oberfläche und in alle Lücken auf- beziehungsweise eingebracht. Anschließend sollte er mit einem geeigneten Werkzeug 14, beispielsweise einem Pinsel oder Spachtel verteilt werden und bevorzugt auch (beispielsweise mit einem kurzborstigen Pinsel) in Poren eingerieben werden. Der Kleber 7 sollte mit einem leichten Überschuss zwischen den Fingern und in den Lücken aufgetragen und gleichmäßig verteilt sein.

Die mit den Fingern zu verbindende Oberfläche der zweiten Decklage 4a sollte ebenfalls mit dem Kleber 7 beaufschlag werden, bevorzugt ebenfalls mittels einer Kartuschen-Pistole 13. Auch vorgesehene Überlappungsbereiche zur Verbindung mit der bestehenden Decklage 4c, 4d der an die Verbindungsstelle angrenzenden Transportbandabschnitte sollten mit Kleber 7 beaufschlagt werden. Bevorzugt wird der Kleber 7 mit einem geeigneten Werkzeug 14, bevorzugt einem Spachtel oder Pinsel gleichmäßig über die zu beaufschlagende Oberfläche verteilt und (bevorzugt mit einem kurzborstigen Pinsel) auch in Poren eingerieben. Bevorzugt wird die Decklage 4a, 4b mit einer Klebermenge im Bereich von etwa 100 - 800 g/m², bevorzugt 150 - 600 g/m², besonders bevorzugt 200 - 400 g/m² beaufschlagt. Die benötigte Klebermenge hängt insbesondere von der Rauheit der zu verklebenden Oberflächen und der Webdichte des Textilgewebes 24 ab.

Wie in Figur 9f ebenfalls gezeigt ist, ist vorgesehen, dass der Kleber 7 auch auf die äußeren Bereiche der ersten Decklage 4b aufgebracht wird. Dies ist notwendig, um die äußeren Kanten des Transportbandes 1 oder - falls diese zuvor entfernt wurden neue äußere Kanten des Transportbandes 1 fixieren zu können.

Nachdem die äußeren Kanten verklebt wurden, kann die zweite Decklage 4a auf die mit Kleber versehene Fingerverbindung aufgesetzt werden. Die Decklage 4a sollte leicht angepresst werden. Als besonders bevorzugt hat sich eine Rolle 15 zum Anpressen erwiesen, da mit deren Hilfe Lufteinschlüsse nach Außen ausgetrieben werden können und gleichzeitig ein hoher Anpressdruck erreicht werden kann.

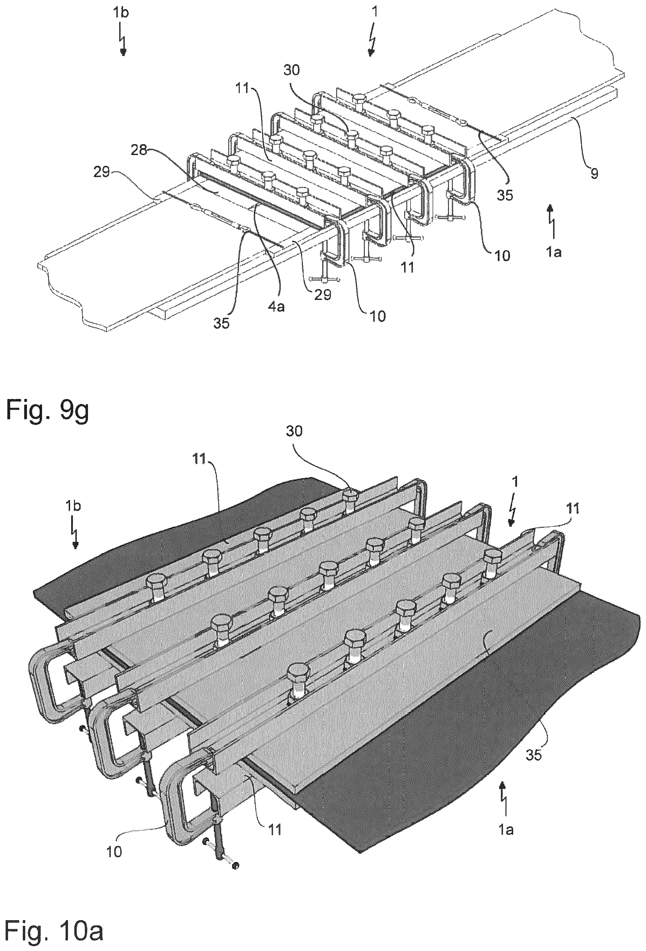

Anschließend empfiehlt es sich, den oben beschriebenen seitlichen Überstand der Schutzschicht 28 um die Verbindungsstelle umzuschlagen. Dadurch kann die Verbindungsstelle auch seitlich geschützt werden. Bei breiten Transportbändern 1 kann eine zwischen den umgeschlagenen Enden der Schutzschicht 28 verbleibender Zwischenraum durch Auflegen einer weiteren Schutzschicht überdeckt werden. Die umgeschlagene Schutzschicht ermöglich insbesondere den Schutz der seitlichen Kanten und somit das Anlegen von Kantenschienen 29 während der Fixierung. Dadurch können die (in Figur 9g nicht mehr erkennbaren) Finger 26 auch in Breitenrichtung des Transportbandes 1 druckbeaufschlagt werden. Die Kantenschienen 29 sollten eine etwas geringere Höhe als das Transportband 1 aufweisen um die Druckbeaufschlagung der Verbindungsstelle nicht zu beeinträchtigen. Ein Höhenunterschied von 0,5 - 1,5 mm, bevorzugt etwa 0,8 - 1,2 mm, besonders bevorzugt 0,9 - 1,1 mm hat sich als besonders geeignet erwiesen, da somit auch eine großflächige Druckbeaufschlagung in Höhenrichtung des Transportbandes möglich ist.

In Figur 9g ist eine schematische Darstellung eines zum Aushärten des Klebers 7 fixieren, mit Stahlseilgurten 23 verstärkten Transportbandes 1 gezeigt. Die Kantenschienen 29 werden durch geeignete Mittel 35 (hier Längenveränderliche Stahlseile, denkbar wären aber auch beispielsweise Ketten mit Spannschrauben) in Richtung aufeinander zu druckbeaufschlagt. Dadurch wird auch eine Druckbeaufschlagung der Finger 26 aufeinander zu beziehungsweise in Breitenrichtung des Transportbandes 1 gewährleistet. Insbesondere in Kombination mit der Druckbeaufschlagung in Höhenrichtung des Transportbandes 1 und der damit einhergehenden Verformung der in dem druckbeaufschlagten Bereich angeordneten (Gummi-) Elemente in Breitenrichtung des Transportbandes 1 ist eine ausreichende Druckbeaufschlagung der Klebestellen in Breitenrichtung des Transportbandes gewährleistet.

In Höhenrichtung wird die Verbindungsstelle ebenfalls druckbeaufschlagt. Dazu ist eine obere Druckverteileinrichtung 11 (hier eine (gegebenenfalls vorgespannte) Platte) vorgesehen, die durch geeignete Druckbeaufschlagungsmittel 10 (hier beispielsweise Schraubzwingen) in Höhenrichtung des Transportbandes gegenüber einer unteren Druckverteileinrichtung, nämlich dem oben erwähnten Teil der Fixiervorrichtung, druckbeaufschlagt. Die Fixiervorrichtung soll somit nicht nur das Band und die Verbindungsstelle für die Dauer der Aushärtung des Klebers 7 fixieren, sondern ausreichend Druck auf die Verbindungsstelle ausüben. Als geeignet hat sich bei Stahlseilgurten ein Druck im Bereich von 10 - 50 N/cm², bevorzugt im Bereich von 15 - 30 N/cm², besonders bevorzugt von etwa 20 N/cm² erwiesen. Bei diesem Druck ist gewährleistet, dass ausreichend Kleber 7 auch zwischen die Finger 26 und gegebenenfalls in das Textilgewebe 24 eingepresst wird. Als Alternative zu der gezeigten Fixiereinrichtung 10, 11 könnte bei Verfügbarkeit auch eine Vulkanisierpresse herangezogen werden, wodurch bei entsprechender Temperierung auch die Aushärtung beschleunigt werden könnte.

In den Figuren 10a und 10b sind schematisch geeignete Fixiervorichtungen 10, 11 für eine gleichmäßige Druckverteilung über die Verbindungsstelle dargestellt.

In Figur 10a werden zur gleichmäßigen Druckbeaufschlagung U-Profile 10a verwendet, wobei gegebenenfalls lokal durch Stellschrauben 30 der Druck angepasst und/oder die Durchbiegung der Profile 10a kompensiert werden kann. Die U-Profile 10 sind auf gegenüberliegenden Seiten der Klebeverbindung angeordnet, druckbeaufschlagen dort bevorzugt eine weitere Druckverteileinrichtung 10b und werden durch Schraubzwingen 11 oder andere geeignete Werkzeuge 11 aufeinander zu druckbeaufschlagt.

Figur 10b zeigt eine Alternative, in der vorgebogene Hohlprofile 10a verwendet werden, um weitere Druckverteileinrichtungen 10b - beispielsweise Verbundwerkstoffplatten - über eine große Fläche gelichmäßig mit Druck zu beaufschlagen. Die vorgebogenen Hohlprofile sind auf gegenüberliegenden Seiten der Klebeverbindung angeordnet und werden durch Schraubzwingen 11 oder andere geeignete Werkzeuge 11 aufeinander zu druckbeaufschlagt.

Figur 11a - k zeigen eine schematische Darstellung einer weiteren Alternative zum Verbinden von Enden 1a, 1b mit Stahlseilgurten 23 verstärkter Transportbänder 1. Diese Alternative ist insbesondere in der Vorbereitung der Verbindungsstelle deutlich einfacher als die oben beschriebene Variante gemäß der Figuren 9a - g. Bei dieser Alternative ist nämlich nicht die Ausbildung separater Finger notwendig, sondern nach dem Ausbilden einer gemeinsamen Stoßkante 31 an den zu verbindenden Transportbandenden 1a, 1b werden zwischen den enthaltenden Stahlseilen 23 lediglich in parallel zu diesen verlaufende Einkerbungen 32 erzeugt in die zusätzliche Zugbelastungsübertragungsmittel 33 wie beispielsweise Stahlseile derart eingelegt werden, dass sie die Stoßkante 31 der zu verbindenden Transportbandenden 1a, 1b überbrückt. Der Überlappungsbereich der bereits zuvor enthaltenen Stahlseile 23 und der neu eingelegten Zugbelastungsübertragungsmittel 33 sollte so gewählt sein, dass die Verbindungsstelle eine Länge analog der DIN 22131 oder ISO 15236 Teil 4 aufweist.

Figur 11a zeigt eine schematische Darstellung eines Verfahrensschritts zum Vorbereiten zu verbindender Enden 1a, 1b von mit Stahlseilgurten 23 verstärkten Transportbändern. Dazu werden die zu verbindenden Gurtenden 1a, 1b zunächst fixiert und dazu beispielsweise auf eine untere Fixiervorrichtung oder plane Werkbank 9 abgelegt und beispielsweise mit Kanthölzern und/oder Gurtspannern oder anderem geeigneten Werkzeug 10, 11 fixiert. Wie bereits oben für das im Zusammenhang mit den Figuren 9a - 9g beschriebene Verfahren dargestellt wurde, sollte dabei ein genügend großer Abstand eingehalten werden, um beide Bandenden 1a, 1b umschlagen zu können. Anschließend sollte das Band 1 zur Ausbildung einer geraden Stoßkannte 31 gekürzt werden. Bevorzugt wird die Stoßkante 31 im Winkel von 90° zur Längsrichtung des Bandes ausgerichtet. Andere Winkel sind jedoch ebenfalls möglich und könnten (wie oben bezüglich nicht mit Stahlseilen verstärkter Bänder beschrieben) eine günstigere Verteilung der Zuglast auf die Verbindungsstelle bewirken. Ausgehend von dem Bandende 1a, 1b wird nun die gewünschte Verbindungslänge markiert. Die Verbindungslänge könnte beispielsweise in Anlehnung an DIN 22131 oder ISO 15236 Teil 4 ausgewählt werden. Die Verbindungslänge und gegebenenfalls der Winkel (90° oder im Fall von trapezförmiger Verbindung davon abweichend (siehe oben)) werden auf der auf Banddecke 4 markiert. Anschließend wird die Banddecke 4 mit einem geeigneten Werkzeug, beispielsweise einem Messer oder Cutter 22 sorgfältig angeschnitten. Dabei ist zu beachten, dass der die Stahlseile 23 enthaltene Kern möglichst nicht angeschnitten wird, um eine möglichst starke Verbindung Verbindungsstelle mit dem verbleibenden Bandenden 1a, 1b beizubehalten.

Figur 11b zeigt eine schematische Darstellung eines weiteren Verfahrensschritts zum Vorbereiten zu verbindender Enden 1a, 1b von mit Stahlseilgurten 23 verstärkten Transportbändern 1. Anders als bei dem oben beschriebenen Verfahren ist es nicht erforderlich oder bevorzugt, dass die (bezüglich der Längsrichtung des Bandes seitlich angeordneten) Bandkanten 6a, 6b im Bereich der Verbindung abtrennt werden. Die Decklagen 4c, 4d werden von den markierten Bandenden 1a, 1b abgezogen. Wie insbesondere im Zusammenhang mit der Figur 11c dargestellt und beschrieben ist, ist das abziehen der gegenüberliegenden Decklagen 4a, 4b über die gesamte Verbindungslänge nicht notwendig, da keine separaten Finger freigelegt werden sollen. Jedoch bietet es sich an, zumindest im Bereich der Stoßkante 31 einen Teil der gegenüberliegenden Decklagen 4a, 4b anzutragen, um eine Stoßlücke 3 auszubilden, die mit einem Stoßlückenstreifen 2 überbrückt werden kann. Dieser schützt die Stoßkante 31 vor mechanischer Belastung und hilft so bei der Nutzung des Transportbandes 1 einen Bruch an der Verbindungsstelle zu verhindern. Die Kanten der Stoßlücke 3 werden anschließend mit einem flachen Winkel von beispielsweise 5° - 45° bevorzugt 10° - 35°, besonders bevorzugt 20° - 30° abgeschliffen. Eine solche Schräge ermöglicht später eine gute Haftung des Stoßlückenstreifens 2 auch in diesem Bereich, da eine vergleichsweise große Überlappung und somit Haftung des neu aufgebrachten Stoßlückenstreifens 2 und des ursprünglichen Transportbandabschnitts erzielt werden kann. Wie oben bereits erwähnt wurde, ist auch hier aufgrund des üblicherweise bei derartigen Transportbändern 1 auftretenden Gewichts der Einsatz maschineller Hilfsmittel wie beispielsweise eines Krans oder einer Seilwinde empfehlenswert. Weiterhin wird zur Verwendung eines Messers und/oder eines elektrischen (beziehungsweise in kritischer Umgebung - beispielsweise unter Tage - eines pneumatischen) Gurthobels 22 empfohlen.

Figur 11d zeigt eine schematische Darstellung eines Verfahrensschritts zum Ausbilden einer Vielzahl von Einkerbungen oder Furchen 32, die zwischen den jeweils ein Stahlseil 23 umschließenden Stegen 34 angeordnet sind. Die Furchen 32 erstrecken sich somit in Längsrichtung des Transportbandes 1. Bevorzugt wird hierfür ein Messer und/oder ein elektrischer (beziehungsweise in kritischer Umgebung - beispielsweise unter Tage - ein pneumatischer) Gurthobel 22 empfohlen.

Ist die benötigte Anzahl an Einkerbungen oder Furchen 32 ausgebildet, werden die Bandenden 1a, 1b so aneinander ausgerichtet, dass die Stoßkanten 31 beider Bandenden 1a, 1b aneinander liegen. Anschließend werden die Bandenden 1a, 1b wie in Figur 11e dargestellt umgeschlagen, so dass die Stoßkanten auf einem Abschnitt des dem Bandende 1a, 1b zugehörigen Transportbandes 1 aufliegen. In dieser Position werden die Bandenden 1a, 1b fixiert und der Stoßlückenstreifen 2 auf der Fixiereinrichtung abgelegt. Falls gewünscht wird eine (hier nicht dargestellte) Textilarmierung auf den Stoßlückenstreifen 2 aufgebracht.

Anschließend werden nun wie in Figur 11e gezeigt zu verklebenden Oberflächen für das Verkleben vorbereitet. Dies schließt bevorzugt das Anrauen mittels eines geeigneten Werkzeugs 12 wie beispielsweise einem aus dem Stand der Technik bekannten Anrauer, einer Drahtbürste oder einem Winkelschleifer ein.

Anschließend kann wie in Figur 11f dargestellt ist, das Aufbringen des Klebers 7 auf Oberflächen der miteinander zu verbindenden Enden 1a, 1b von mit Stahlseilgurten 23 verstärkten Transportbändern 1 erfolgen. Dazu wird der Kleber 7 möglichst schnell auf sämtliche Kontaktflächen aufgetragen und anschließend mit einem geeigneten Werkzeug, beispielsweise einem Spachtel oder Pinsel 14 gleichmäßig verteilt. Ein Pinsel 14 bietet sich besonders an, da der Kleber 7 auch in Poren eingerieben werden sollte. Wie bereits oben erwähnt, sollte das Aufbringen des Klebers 7 möglichst schnell erfolgen, da die mit Kleber 7 zu beaufschlagende Oberfläche sehr groß ist und der Kleber 7 im statischen Mischer 13 bereits nach kürzester Zeit auszuhärten beginnt.

Danach werden die Bandenden 1a, 1b zurückgeklappt, so dass die einseitig zwischen beiden Bandenden 1a, 1b gebildete Stoßlücke 3 wie in Figur 11g gezeigt auf dem Stoßlückenstreifen 2 zu liegen kommt und mit diesem verklebt wird. Zur Verklebung können die Bandenden 1a, 1b beispielsweise mittels einer (hier nicht gezeigten) Rolle auf den Stoßlückenstreifen 2 angedrückt werden.

In die Einkerbungen oder Furchen 32 sowie auf die Oberflächen der Stege 34 wird nun Kleber 7 eingebracht, beispielsweise mittels eine Kartuschenpistole 13. Mit geeigneten Werkzeugen 14 wie Pinsel oder Spachtel kann der Kleber verteilt werden.

Anschließend werden wie in Figur 11h schematisch dargestellt, die Zugbelastungsübertragungsmittel 33 wie beispielsweise Stahlseile derart eingelegt, dass bevorzugt jeweils eines je Furche 32 angeordnet ist und in dieser mit den Furchenwänden verklebt werden kann. Gegebenenfalls kann dabei herausgequetscht Kleber 7 mit geeignetem Werkzeug 14 verteilt werden. Wenn in jeder Furche 32 ein Zugbelastungsübertragungsmittel 33 angeordnet ist, sollte sichergestellt werden, dass auch die Oberflächen der Stege 34 flächig mit Kleber 7 beaufschlagt werden, denn nun soll wie in Figur 11i dargestellt, die Decklage 4a darauf aufgebracht werden. Dazu ist diese unterseitig bereits ebenfalls vollflächig mit Kleber 7 beaufschlag worden. Nachdem die Decklage 4a auf die mit Kleber versehenen, Furchen 32, Zugbelastungsübertragungsmittel 33 und Stege 34 aufgesetzt worden und bevorzugt leicht angepresst worden ist, wird der seitliche Überstand der Schutzschicht 28 um die Verbindungsstelle umgeschlagen. Dadurch kann die Verbindungsstelle auch seitlich geschützt werden. Eventuell ist zwischen den umgeschlagenen Enden der Schutzschicht 28 das Auflegen einer weiteren Schutzschicht vorteilhaft, um einen zwischen den umgeschlagenen Enden der Schutzschicht 28 verbleibenden Zwischenraum zu überdecken.

Seitlich an die umgeschlagene Schutzschicht werden nun wie in Figur 11j gezeigt bevorzugt Kantenschienen 29 angelegt, um die Verbindungsstelle auch in Breitenrichtung zu fixieren. Da - anders als bei der Fingerverbindung - jedoch die einzelnen Furchen und Stege ständig miteinander in Verbindung bleiben, ist diese Fixierung weniger kritisch und meist optional. Die Kantenschienen 29 sollten wie oben beschrieben eine etwas geringere Höhe als das Transportband 1 aufweisen, um die großflächige Druckbeaufschlagung in Höhenrichtung des Transportbandes zu ermöglichen. Die Kantenschienen 29 sollten mittels geeigneter (in Figur 11k dargestellter) Mittel 35 in Richtung aufeinander zu druckbeaufschlagt werden.

In Figur 11k ist eine schematische Darstellung eines zum Aushärten des Klebers 7 fixieren, mit Stahlseilgurten 23 verstärkten Transportbandes 1 gezeigt. Die Kantenschienen 29 werden durch geeignete Mittel 35 (hier Längenveränderliche Stahlseile, denkbar wären aber auch beispielsweise Ketten mit Spannschrauben) in Richtung aufeinander zu druckbeaufschlagt. Dadurch wird eine übermäßige Ausdehnung der Verbindungsstelle in Breitenrichtung bei Druckbeaufschlagung in Höhenrichtung vermieden. In Höhenrichtung wird die Verbindungsstelle mittels einer oberen Druckverteileinrichtung 10 (hier eine (gegebenenfalls vorgespannte) Platte) vorgesehen, die durch geeignete Druckbeaufschlagungsmittel 11 (hier beispielsweise Schraubzwingen) in Höhenrichtung des Transportbandes 1 gegenüber einer unteren Druckverteileinrichtung, nämlich dem oben erwähnten Teil der Fixiervorrichtung, druckbeaufschlagt. Zur Druckübertragung zwischen dem Druckbeaufschlagungsmittel 11 und der Druckverteileinrichtung 10 werde im gezeigten Beispiel U-Profile verwendet. Die U-Profile können Bohrungen mit darin angeordneten Stellschrauben 30 aufweisen, welche es ermöglichen, den Druck lokal anzupassen und/oder die Durchbiegung der U-Profile zu kompensieren.

Bei dieser Variante ist der Kleberverbrauch üblicherweise etwas geringer als bei der zuvor beschriebenen Variante gemäß der Figuren 9a - 9g. Da die erzeugten Einkerbungen 32 formschlüssig neben dem Zugbelastungsübertragungsmittel 33 nur mit wenig Kleber 7 aufgefüllt werden müssen, liegt der Kleberbedarf üblicherweise im Bereich von 500 - 1500 g/m², meist im Bereich von 750 - 1000 g/m². Insbesondere wird der Kleberbedarf durch die Beschaffenheit des Materials (insbesondere Rauheit, Dichtigkeit des Abdeckgewebes, Spaltbreite zwischen Nut und Zugbelastungsübertragungsmittel oder Stahlseil) beeinflusst.

Als bevorzugt hat es sich bei dieser Variante erwiesen, Decklagen mit einer Textilarmierung 24 zu verwenden und zu verkleben. Dies hat sich bei im Wesentlichen unverändertem Verfahrensaufwand als vorteilhaft hinsichtlich einer gesteigerten Verbindungsfestigkeit erwiesen. Bei vorgegebener Verbindungsfestigkeit kann eine kürzere Verbindungslänge genutzt werden.

Vorteilhaft ist - unabhängig vom Verfahren - die obere und untere Decklage 4a, 4b in der Längsrichtung versetzt anzulegen, um einen geschmeidigen Übergang zu gewährleisten.

Im Einzelfall ist zu prüfen, ob die oben beschrieben Alternative aufgrund der zusätzlich eingelegten Zugbelastungsübertragungsmittel für die Trommel der Förderanlage nicht zu steif wird.

Ein weiterer Vorteil der oben beschrieben Klebers ist, dass er auch zur Ausbesserung von Schadstellen in dauerelastischen Kunststoffoberflächen verwendet werden kann. Wie eine solche Behebung einer Schadstelle erfolgen kann ist beispielhaft in den Figuren Fig. 12a - 12f dargestellt.

Figur 12a zeigt eine Aufsicht auf eine Schadstelle 36 eines Transportbandes 1 während des Anschrägens der Schadstellenkanten zur Vorbereitung deren Reparatur. Schadstellen 36 in einem Transportband 1 entstehen vergleichsweise häufig. Ursache kann beispielsweise kantiges Transportgut sein, das auf das Transportband 1 fällt und dieses mit einer Kante beschädigt. In Figur 12a ist ein vergleichsweise kleiner Schaden gezeigt. Oft erstrecken sich derartige Schäden in Längsrichtung des Transportbandes 1, da ein das Transportband 1 durchdringender Gegenstand sich in weiteren Bestandteilen des Transportsystems verfangen kann und dort festgehalten wird. Wird dann das Transportband 1 weiterbetrieben, schneidet ein solcher Gegenstand das Transportband 1 in Längsrichtung regelrecht auf. Je nach Zeit zwischen Entstehung der Schadstelle 36 und dem vollständigen Stillstand des Transportbandes 1 kann das Transportband 1 - in Abhängigkeit der Transportgeschwindigkeit, des Beladungsgrades, des Gewichts des transportierten Guts, der Reaktionszeit bis zum Erkennen des Schadens und anderer Faktoren - bereits mehrere Meter, oft sogar einige hundert Meter weiterlaufen. Dementsprechend können so Risse mit einer Ausdehnung von bis zu 500 Meter in Längsrichtung des Bandes entstehen. Müsste eine solche Schadstelle 36 ausgetauscht werden, wäre dies mit enormem Aufwand und Kosten verbunden. Insbesondere bei einem Einsatz in schwer zugänglichem Umfeld ist der Aufwand enorm und ein mehrtätiger Nutzungsausfall die Folge.

Versuche mit dem oben beschriebenen Kleber 7 haben jedoch gezeigt, dass derartige Schadstellen mit diesem Kleber 7 verfüllt werden können.

Wie in Figur 12a gezeigt ist zur Reparatur einer Schadstelle 36 vorgesehen, die späteren Kontaktflächen mit dem Kleber zunächst vorzubereiten. Dazu wird die Kontaktfläche vergrößert, indem die Kanten der Schadstelle angeschrägt werden. Als bevorzugt hat sich erwiesen, die Kanten der beschädigten Stelle in einem Winkel von über 30° anzuschrägen. Dies könnte beispielsweise wie in Figur 12a gezeigt mittels eines geeigneten Werkzeugs 22, wie einem Winkelschleifer oder einem Messer erfolgen.

Anschließend sollte die Oberfläche wie beispielsweise in Figur 12b gezeigt abgeschliffen werden, um eine verbesserte Adhäsion des Klebers 7 zu erreichen. Sollte wie in Figur 12b gezeigt ein geeignetes Werkzeug 12 wie beispielsweise eine Schleifscheibe (z.B. K16) verwendet werden, sollte diese mit geringer Umdrehungszahl, beispielsweise 800 U/min oder weniger betrieben werden. Durch die bevorzugte geringe Umdrehungszahl können Schäden am dauerelastischen Kunststoff, beispielsweise Verbrennung des Gummis vermieden oder zumindest reduziert werden. Anschließend sollten die Ränder der Schadstelle 36 aufgeraut werden, wodurch die Adhäsion des Klebers weiter verbessert werden kann. Dies könnte beispielsweise mittels einer MetallRundbürste oder Aufraubürste erfolgen. Das Anrauen sollte quer zur Transportrichtung erfolgen, um die bestmögliche Verklebung zu erreichen. Anschließend muss Abrieb und sonstiger Schmutz entfernt werden, beispielsweise mittels einer Bürste, Druckluft oder anderer geeigneter Mittel 14. Bei Temperaturen unterhalb des Taupunktes sollten die Kontaktflächen mit einem saugfähigen Papier getrocknet werden und leicht erwärmt werden. Als geeignet hat sich Heißluftbeaufschlagungseinrichtung erwiesen. Eine Erwärmung über 60°C sollte vermieden werden, um das Transportband nicht zu beschädigen und die Verarbeitbarkeit des Klebers 7 zu gewährleisten.

Wie in Fig. 12c gezeigt ist, sollte bei großflächigen Schadstellen 36 eine Textilarmierung 24 eingelegt werden. Insbesondere bei Löcher und Rissen breiter als 1 cm oder länger als 10 cm sollte eine Textilarmierung 24 eingelegt werden. Dazu ist es vorteilhaft, einige cm der Karkasse um die Schadstelle 36 herum freizulegen und dann die Textilarmierung 24 einzukleben, um ausreichend Festigkeit zu erreichen.

Durchgehende Risse und Löcher sollten auf einer Bandseite zunächst mit einem (nicht gezeigten) Klebeband überbrückt werden. Dadurch bildet sich ein dreiseitig geschlossener Bereich, der mit Kleber 7 und eventuell zusätzlichem Füllmaterial aufgefüllt werden kann.

Figur 12d zeigt eine Ansicht auf eine Schadstelle eines Transportbandes 1 während des Einbringens des Klebers 7 in die Schadstelle. In die wie oben beschrieben vorbereitete Schadstelle 36 kann nun der Kleber 7 eingebracht werden. Als bevorzugt hat sich die Verwendung einer Kartuschenpistole 13 erwiesen. Insbesondere bei kleineren Schadstellen 36 sollten die ersten Tropfen des per Kartuschenpistole 13 ausgepressten Kleber 7 verworfen werden, da in diesen ersten Tropfen eventuell keine ausreichend vermischten Komponenten vorliegen. Der Kleber 7 sollte innerhalb weniger Minuten aufgetragen und unmittelbar danach, bevorzugt mit einem kurzborstigen Pinsel in die Poren 14 eingerieben werden, um eine gute Haftung zu erreichen. Weiterer Kleber 7 sollte beispielsweise mittels eines Spachtels 14 (siehe Figur 12e) geglättet werden.

Anschließend wir der Kleber 7 zur Aushärtung gebracht. Dies kann bei Umgebungsbedingungen erfolgen oder bei erhöhter Temperatur. Die Zeit bis zur vollständigen Aushärtung des Klebers 7 ist temperaturabhängig und beträgt bei einer beispielhaften Kleberzusammensetzung ca. 60 Minuten bei 23°C. Mit einer geeigneten Heißluftbeaufschlagungseinrichtung könnte die Aushärtung auf weniger als 30 Minuten reduziert werden, wobei jedoch zu beachten ist, dass bei Temperaturen >80°C Schäden am Band 1 oder Kleber 7 auftreten können.

Wenn der Kleber 7 ausgehärtet ist, kann die reparierte Stelle nachbearbeitet werden. Fig. 12f zeigt eine Aufsicht auf eine reparierte Schadstelle 36 eines Transportbandes 1 während der mechanischen Nachbearbeitung. Zur Nachbearbeitung kann die reparierte Schadstelle 36 mittels eines geeigneten Werkzeugs 22 abgeschliffen werden. Anschließend kann das Band 1 wieder verwendet werden. Insbesondere kleinere Schadstellen 36 lassen sich so innerhalb von weniger als einer Stunde reparieren.

Der Zusammenhang zwischen der zur Aushärtung bis zur vollen Funktionsfestigkeit der Bandverbindung und der Temperatur ist in Figur 13 dargestellt. Wie dem Diagramm zu entnehmen ist, ist diese Zeit abhängig von dem verwendeten Kleber und der Temperatur. Im abgebildeten Diagramm ist der Zusammenhang zwischen zwei verschiedenen Klebern, nämlich "Kleber 20" und "Kleber 40" dargestellt. Dargestellt sind beispielhafte Verbindungen von einem mit Stahlseilgurten mit 20 mm Stärke verstärkten Transportband. Bei Umgebungsbedingungen von beispielsweise 23C° wird bei "Kleber 20" eine Aushärtezeit von mindestens 8 Stunden empfohlen. Bei "Kleber 40" sollte die Aushärtezeit mindestens 18 Stunden betragen.

Wie dem Diagramm ebenfalls zu entnehmen ist, kann bei entsprechender Temperierung die Aushärtungszeit auf die jeweiligen Anforderungen angepasst werden. Beispielsweise könnte bei Verwendung einer geeigneten Heizquelle (z.B. einer Heizmatte, einer IR-Lampe, einer Heizplatte, einer Vulkanisierpresse oder anderer) die Aushärtungszeit auf unter 4 Stunden reduziert werden. Beachtet man, dass übliche Materialien für Transportbänder Temperaturen von bis zu 80°C auch für längere Zeit unbeschadet aushalten, könnte bei Auswahl dieser Temperatur zur Aushärtung des Klebers eine Aushärtungszeit von weniger als 2 Stunden erreicht werden, was gegenüber den bisher zur Verbindung von Transportbandenden genutzten Verfahren eine erhebliche Reduzierung und somit auch Kostenersparnis und Verlustreduzierung durch verkürzte Stillstandszeit bedeutet.

Nicht alle beschriebenen Merkmale und Eigenschaften müssen in allen Figuren gezeigt und/oder mit Bezugszeichen versehen sein. Gleiche oder ähnliche Vorrichtungen, Einrichtungen oder Merkmale können mit dem gleichen Bezugszeichen versehen sein, sofern sie gleich oder ähnliche Aufgaben erfüllen.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1:: Transportband,
- 1a, 1b:: Transportbandende,
- 2, 2a, 2b:: (Stoßlücken-) Streifen,
- 3a, 3b:: Stoßlücke,
- 4, 4a, 4b, 4c, 4d:: Abdecklage,
- 5, 5a, 5b, 5c:: Stufe,
- 6a, 6b:: Seiten des Transportbandes,
- 7:: Kleber,
- 8a, 8b, 8c, 8d:: Lage / Ebene,
- L:: Längsrichtung des Transportbandes,
- B:: Breitenrichtung des Transportbandes,
- 9:: Unterlage,
- 10:: Druckbeaufschlagungseinrichtung / Schraubzwinge,
- 11:: Druckverteileinrichtung
- 12:: Werkzeug / Drahtbürste / Anrauer / Winkelschleifer,
- 13:: Kartuschenpistole,
- 14:: Werkzeug / Spachtel / Pinsel,
- 15:: Andrückrolle / Rad,
- 16:: (Metall-) Trommel,
- 17:: (Gummi-) Ummantelung / Belag,
- 18:: Klebefläche,
- 19, 19a, 19b, 19c:: Schnittkante,
- 20:: (Trommel-) Längsachse,
- 21:: überlappender Abschnitt / überstehende Kante,
- 22:: Werkzeug / Messer / Säge / Winkelschleifer,
- 23:: Verstärkung / Stahlseilgurt,
- 24:: Textilarmierung 24,
- 25:: umgebendes Material / Gummimaterial,
- 26, 26a - c, 26n-q:: Finger,
- 27:: Fingerpaar,
- 28:: Schutzschicht,
- 29:: Kantenschiene;
- 30:: Stellschraube,
- 31:: Stoßkante,
- 32:: Einkerbung,
- 33:: Zugbelastungsübertragungsmittel /Stahlseil,
- 34:: Steg,
- 35:: (Druckbeaufschlagungs-) Mittel / längenveränderliche Stahlseil / Kette,
- 36:: Schadstelle

## Patentansprüche

1. Verfahren zum hochfesten und dauerelastischen Verkleben von mindestens zwei Oberflächen miteinander, wovon mindestens eine Oberfläche eine Oberfläche eines dauerelastischen Kunststoffs ist, mittels eines eine Polyurethankomponente umfassenden Klebstoffes (7) umfassend die Schritte:
a) Aufbringen des Klebstoffs (7) auf mindestens eine erste der zu verbindenden Oberflächen,
b) Sicherstellen von Bedingungen, unter denen mindestens ein erster Verfestigungsmechanismus des Klebstoffs (7) abläuft, welcher mindestens eine chemische Reaktion unter Ausbildung einer mindestens ein Schwefelatom einschließenden chemischen Bindung umfasst,
c) In Kontakt bringen der mit dem Klebstoff (7) versehenen ersten Oberfläche mit der optional ebenfalls mit dem Klebstoff (7) versehenen zweiten Oberfläche,
d) Sicherstellen von Bedingungen, unter denen mindestens ein zweiter Verfestigungsmechanismus des Klebstoffs (7) abläuft, welcher mindestens die Ausbildung kristalliner Strukturen aus amorphen Polymeren umfasst.

2. Verfahren nach Anspruch 1,
**dadurch gekennzeichnet, dass**
ein Klebstoff (7) mit weniger als 5 Gewichts-% Lösungsmittel, bevorzugt weniger als 3 Gewichts-% Lösungsmittel, weiter bevorzugt weniger als 1 Gewichts-% Lösungsmittel verwendet wird und besonders bevorzugt ein lösungsmittelfreier Klebstoff (7) verwendet wird, so dass ein zur Verdunstung von Lösungsmittel notwendiges Mindestzeitintervall zwischen den Schritten b) und c) bei einer Umgebungstemperatur zwischen 20 und 25°C weniger als 3 Stunden, bevorzugt weniger als 2 Stunden, weiter bevorzugt weniger als 1 Stunde, weiter bevorzugt weniger als 45 Minuten beträgt und besonders bevorzugt weniger als 30 Minuten beträgt.

3. Verfahren nach Anspruch 1 oder 2,
**dadurch gekennzeichnet, dass**
der Klebstoff (7) ein 2-Komponentenklebstoff ist, welcher bevorzugt in einer Doppelkartusche (13) bereitgestellt wird und weiter bevorzugt mittels einer dazu kompatiblen Kartuschen-Pistole (13) auf die zu verklebende Oberfläche aufgebracht wird.

4. Verfahren nach einem der vorangehenden Ansprüche,
**dadurch gekennzeichnet, dass**
der Klebstoff (7) in einer Menge ≤ 500 g/m², bevorzugt im Bereich von ≤ 300 g/m², weiter bevorzugt im Bereich von ≤ 200 g/m², insbesondere bevorzugt ≤ 100 g/m² auf die zu verklebende Oberfläche aufgebracht wird.

5. Verfahren nach einem der vorangehenden Ansprüche,
**dadurch gekennzeichnet, dass**
zumindest die einen dauerelastischen Kunststoff, bevorzugt Gummi, umfassende Oberfläche bevorzugt beide zu verklebenden Oberflächen vor Schritt a) gesäubert und angeraut werden, bevorzugt unter Verwendung eines Werkzeugs (22) ausgewählt aus einer Gruppe, die Anrauher, Winkelschleifer, (Gurt-) Hobel, Bürsten, Schleifbänder, Schleifscheiben, Fräser und andere umfasst.

6. Verfahren nach einem der vorangehenden Ansprüche,
**dadurch gekennzeichnet, dass**
die zu verklebenden Oberflächen nach Schritt d) mittels einer geeigneten Fixiereinrichtung (10, 11), bevorzugt einer Druckbeaufschlagungseinrichtung (11), gegenüber einander fixiert und/oder druckbeaufschlagt werden, wobei die Druckbeaufschlagungseinrichtung (11) bevorzugt mindestens ein Druckelement, insbesondere bevorzugt mindestens eine Schraubzwinge, und Druckverteilelemente (10) umfasst, wobei die Druckverteilelemente den durch das mindestens eine Druckelement erzeugten Druck über eine Fläche verteilt, die den Verklebebereich umfasst.

7. Verfahren nach einem der vorangehenden Ansprüche,
**dadurch gekennzeichnet, dass**
die zu verklebenden Oberflächen Teile eines dauerelastischen Kunststoffbandes (1), bevorzugt eines Transportbandes (1), insbesondere bevorzugt eines Gummibandes sind, wobei die zu verklebenden Oberflächen bevorzugt gegenüberliegende Enden (1a, 1b) des dauerelastischen Kunststoffbandes (1) sind, welche zu einem Endlosband zusammengefügt werden oder auf gegenüberliegenden Seiten einer Schadstelle (36), insbesondere eines Loches oder Risses, eines Endlosbandes (1) angeordnet sind.

8. Hochfest und dauerelastisch aushärtbarer Klebstoff (7), welcher dafür vorgesehen und eingerichtet ist, mindestens zwei Oberflächen, wovon mindestens eine Oberfläche eine Oberfläche eines dauerelastischen Kunststoffs ist, miteinander, insbesondere bevorzugt nach einem Verfahren gemäß einem der vorangehenden Ansprüche, zu verkleben,
wobei der Klebstoff (7) ein in mindestens zwei verschiedenen Verfestigungsmechanismen aushärtender Klebstoff (7) ist, wobei der erste Verfestigungsmechanismus mindestens eine chemische Reaktion unter Ausbildung einer mindestens ein Schwefelatom einschließenden chemischen Bindung umfasst und der zweite Verfestigungsmechanismus mindestens die Ausbildung kristalliner Strukturen aus amorphen Polymeren umfasst,
**dadurch gekennzeichnet, dass**
der Klebstoff (7) eine Polyurethankomponente umfasst.

9. Hochfest und dauerelastisch aushärtbarer Klebstoff (7) nach Anspruch 8,
**dadurch gekennzeichnet, dass**
der Klebstoff (7) weniger als 5 Gewichts-% Lösungsmittel, bevorzugt weniger als 3 Gewichts-% Lösungsmittel, weiter bevorzugt weniger als 1 Gewichts-% Lösungsmittel umfasst und insbesondere bevorzugt lösungsmittelfrei ist.

10. Hochfest und dauerelastisch aushärtbarer Klebstoff (7) nach -Anspruch 8 oder 9,
**dadurch gekennzeichnet, dass**
der Klebstoff (7) durch die Auswahl und das Mengenverhältnis von schwefelspendender Komponente und Polyurethankomponente so eingestellt ist, dass die mindestens zwei verschiedenen Verfestigungsmechanismen bei einer Umgebungstemperatur im Bereich von - 50 bis +80°C, bevorzugt -30 bis +70°C, weiter bevorzugt -10 bis +65°C, insbesondere bevorzugt 0 bis +60°C initiierbar sind.

11. Hochfest und dauerelastisch aushärtbarer Klebstoff (7) nach einem der Ansprüche 8 - 10, **dadurch gekennzeichnet, dass**
der Klebstoff (7) im ausgehärteten Zustand eine Reißfestigkeit > 6 N/mm², bevorzugt > 8 N/mm², bevorzugt > 10 N/mm², weiter bevorzugt > 12 N/mm², insbesondere bevorzugt > 15 N/mm² aufweist.

12. Hochfest und dauerelastisch aushärtbarer Klebstoff (7) nach einem der Ansprüche 8 - 11, **dadurch gekennzeichnet, dass**
der Klebstoff (7) im ausgehärteten Zustand ein E-Modul im Bereich von 0,2 - 40 N/mm², bevorzugt von 0,3 - 30 N/mm² und insbesondere bevorzugt von 0,4 - 20 N/mm² aufweist.

13. Hochfest und dauerelastisch aushärtbarer Klebstoff (7) nach einem der Ansprüche 8 - 12, **dadurch gekennzeichnet, dass**
der Klebstoff (7) im ausgehärteten Zustand auf SBR-Gummi eine Schälfestigkeit > 4 N/mm, bevorzugt > 6 N/mm, bevorzugt > 8 N/mm, weiter bevorzugt > 10 N/mm, insbesondere bevorzugt > 12 N/mm aufweist.

14. Hochfest und dauerelastisch aushärtbarer Klebstoff (7) nach einem der Ansprüche 8 - 13, **dadurch gekennzeichnet, dass**
der Klebstoff (7) im ausgehärteten Zustand eine Shore-A-Härte im Bereich von 50 - 99 Shore, bevorzugt 55 - 95 Shore, besonders bevorzugt 60 - 90 Shore aufweist.

## Claims

1. A method for high-strength and permanently elastic bonding of at least two surfaces to one another, of which at least one surface is a surface of a permanently elastic plastic, by means of an adhesive (7) comprising a polyurethane component, said method comprising the steps of:
a) applying the adhesive (7) to at least a first of the surfaces to be connected,
b) ensuring conditions under which at least a first hardening mechanism of the adhesive (7) takes place, said mechanism comprising at least a chemical reaction with the formation of a chemical bond including at least one sulphur atom,
c) bringing the first surface provided with the adhesive (7) into contact with the second surface optionally also provided with the adhesive (7),
d) ensuring conditions under which at least a second hardening mechanism of the adhesive (7) takes place, said mechanism comprising at least the formation of crystalline structures from amorphous polymers.

2. The method according to claim 1,
**characterised in that**
an adhesive (7) with less than 5 wt.% of solvent, preferably less than 3 wt.% of solvent, more preferably less than 1 wt.% of solvent is used and, particularly preferably, a solvent-free adhesive (7) is used so that a minimum time interval between steps b) and c) necessary for the evaporation of solvent at an ambient temperature between 20 and 25° C amounts to less than 3 hours, preferably less than 2 hours, more preferably less than 1 hour, more preferably less than 45 minutes, and particularly preferably less than 30 minutes.

3. The method according to claim 1 or 2,
**characterised in that**
the adhesive (7) is a two-component adhesive, which is preferably provided in a double cartridge (13) and, more preferably, is applied to the surface to be bonded by means of a compatible cartridge gun (13).

4. The method according to one of the preceding claims,
**characterised in that**
the adhesive (7) is applied to the surface to be bonded in an amount ≤ 500 g/m², preferably in the range of ≤ 300g/m², more preferably in the range of ≤ 200 g/m², particularly preferably ≤ 100 g/m².

5. The method according to one of the preceding claims,
**characterised in that**
at least the surface comprising a permanently elastic plastic, preferably rubber, and preferably both surfaces to be bonded are cleaned and roughened before step a), preferably using a tool (22) selected from a group which comprises rougheners, angle grinders, (belt) planers, brushes, grinding belts, grinding wheels, milling cutters, and others.

6. The method according to one of the preceding claims,
**characterised in that**
the surfaces to be bonded are fixed and/or pressurised with respect to one another after step d) by means of a suitable fixing device (10, 11), preferably a pressurising device (11), wherein the pressurising device (11) preferably comprises at least one pressure element, particularly preferably at least one screw clamp, and pressure distribution elements (10), wherein the pressure distribution elements distribute the pressure generated by the at least one pressure element over an area which comprises the bonding area.

7. The method according to one of the preceding claims,
**characterised in that**
the surfaces to be bonded are parts of a permanently elastic plastic belt (1), preferably a conveyor belt (1), and particularly preferably a rubber belt, wherein the surfaces to be bonded preferably are opposite ends (1a, 1b) of the permanently elastic plastic belt (1), which are joined together to form an endless belt or are arranged on opposite sides of a damaged area (36), in particular a hole or tear, of an endless belt (1).

8. A high-strength and permanently elastic curable adhesive (7), which is provided and set up to bond at least two surfaces to each other, at least one surface of which is a surface of a permanently elastic plastic, particularly preferably according to a method according to one of the preceding claims,
wherein
the adhesive (7) is an adhesive (7) curing in at least two different hardening mechanisms, wherein the first hardening mechanism comprises at least a chemical reaction to form a chemical bond including at least one sulphur atom, and the second hardening mechanism comprises at least the formation of crystalline structures from amorphous polymers
**characterised in that**
the adhesive (7) comprises a polyurethane component.

9. The high-strength and permanently elastic curable adhesive (7) according to claim 8, **characterised in that**
the adhesive (7) comprises less than 5 wt.% solvent, preferably less than 3 wt.% solvent, more preferably less than 1 wt.% solvent, and is particularly preferably solvent-free.

10. The high-strength and permanently elastic curable adhesive (7) according to claim 8 or 9,
**characterised in that**
the adhesive (7) is set by the selection and the ratio of amounts of the sulphur-contributing component and the polyurethane component such that the at least two different hardening mechanisms can be initiated at an ambient temperature in the range of -50 to + 80°C, preferably -30 to + 70°C, more preferably -10 to + 65°C, and particularly preferably 0 to + 60°C.

11. The high-strength and permanently elastic curable adhesive (7) according to one of claims 8 - 10,
**characterised in that**
the adhesive (7) in the cured state has a tensile strength > 6 N/mm², preferably > 8 N/mm², preferably > 10 N/mm², more preferably > 12 N/mm², and particularly preferably > 15 N/mm².

12. The high-strength and permanently elastic curable adhesive (7) according to one of claims 8 - 11,
**characterised in that**
the adhesive (7) in the cured state has a modulus of elasticity in the range from 0.2 to 40 N/mm², preferably from 0.3 - 30 N/mm² and particularly preferably from 0.4 - 20 N/mm².

13. The high-strength and permanently elastic curable adhesive (7) according to one of claims 8 - 12,
**characterised in that**
the adhesive (7) in the cured state on SBR rubber preferably has a peel strength > 4 N/mm, preferably > 6 N/mm, preferably > 8 N/mm, more preferably > 10 N/mm, and particularly preferably > 12 N/mm.

14. The high-strength and permanently elastic curable adhesive (7) according to one of claims 8 - 13,
**characterised in that**
the adhesive (7) in the cured state has a Shore A hardness in the range from 50 - 99 Shore, preferably 55 - 95 Shore, and particularly preferably 60 - 90 Shore.

## Revendications

1. Procédé pour le collage à haute résistance et à élasticité permanente d'au moins deux surfaces l'une avec l'autre, dont au moins une surface est une surface d'une matière plastique à élasticité permanente, au moyen d'un adhésif (7) comportant un composant polyuréthane, comportant les étapes consistant à :
a) appliquer l'adhésif (7) sur au moins une première des surfaces à assembler ;
b) assurer des conditions dans lesquelles au moins un premier mécanisme de durcissement de l'adhésif (7) a lieu, lequel comporte au moins une réaction chimique avec la formation d'une liaison chimique comprenant au moins un atome de soufre ;
c) mettre en contact la première surface pourvue de l'adhésif (7) avec la deuxième surface, facultativement également pourvue de l'adhésif (7) ;
d) assurer des conditions dans lesquelles au moins un deuxième mécanisme de durcissement de l'adhésif (7) a lieu, lequel comporte au moins la formation de structures cristallines à partir de polymères amorphes.

2. Procédé selon la revendication 1,
**caractérisé par le fait que**
l'on utilise un adhésif (7) avec moins de 5 % en poids de solvant, de préférence moins de 3 % en poids de solvant, de façon davantage préférée moins de 1 % en poids de solvant, et, de façon particulièrement préférée, on utilise un adhésif (7) sans solvant, de telle sorte qu'un intervalle de temps minimum entre les étapes b) et c) nécessaire pour l'évaporation du solvant à une température ambiante entre 20 et 25°C s'élève à moins de 3 heures, de préférence à moins de 2 heures, de façon davantage préférée à moins d'1 heure, de façon davantage préférée à moins de 45 minutes et, de façon particulièrement préférée, à moins de 30 minutes.

3. Procédé selon l'une des revendications 1 ou 2,
**caractérisé par le fait que**
l'adhésif (7) est un adhésif à 2 composants, lequel est, de préférence, fourni dans une cartouche double (13) et est, de façon davantage préférée, appliqué sur la surface à coller au moyen d'un pistolet à cartouches (13) compatible à cet effet.

4. Procédé selon l'une des revendications précédentes,
**caractérisé par le fait que**
l'adhésif (7) est appliqué sur la surface à coller dans une quantité ≤ 500 g/m², de préférence dans la plage de ≤ 300 g/m², de façon davantage préférée dans la plage de ≤ 200 g/m², de façon particulièrement préférée ≤ 100 g/m².

5. Procédé selon l'une des revendications précédentes,
**caractérisé par le fait qu'**
au moins la surface comportant une matière plastique à élasticité permanente, de préférence du caoutchouc, de préférence les deux surfaces à coller, sont nettoyées et rendues rugueuses avant l'étape a), de préférence à l'aide d'un outil (22) choisi dans un groupe qui comporte les outils de ponçage, les meuleuses d'angle, les rabots (à bande), les brosses, les bandes abrasives, les disques abrasifs, les fraises et autres.

6. Procédé selon l'une des revendications précédentes,
**caractérisé par le fait que**
les surfaces à coller sont fixées et/ou pressées en regard l'une de l'autre après l'étape d) au moyen d'un dispositif de fixation approprié (10, 11), de préférence d'un dispositif de pressage (11), le dispositif de pressage (11) comportant de préférence au moins un élément de pressage, de façon particulièrement préférée au moins une vis de serrage, et des éléments de répartition de pression (10), les éléments de répartition de pression répartissant la pression générée par ledit au moins un élément de pression sur une surface qui comporte la zone de collage.

7. Procédé selon l'une des revendications précédentes,
**caractérisé par le fait que**
les surfaces à coller sont des parties d'une bande de matière plastique à élasticité permanente (1), de préférence d'une bande transporteuse (1), de façon particulièrement préférée d'une bande en caoutchouc, les surfaces à coller étant, de préférence, des extrémités opposées (1a, 1b) de la bande de matière plastique à élasticité permanente (1), lesquelles sont assemblées en une bande sans fin ou sont disposées sur des côtés opposés d'un emplacement endommagé (36), en particulier d'un trou ou d'une fissure, d'une bande sans fin (1).

8. Adhésif (7) durcissable à haute résistance et à élasticité permanente, lequel est prévu et agencé pour coller au moins deux surfaces l'une à l'autre, dont au moins une surface est une surface d'une matière plastique à élasticité permanente, de façon particulièrement préférée selon un procédé conforme à l'une des revendications précédentes,
l'adhésif (7) étant un adhésif (7) durcissant dans au moins deux mécanismes de durcissement différents, le premier mécanisme de durcissement comportant au moins une réaction chimique avec la formation d'une liaison chimique comprenant au moins un atome de soufre, et le deuxième mécanisme de durcissement comportant au moins la formation de structures cristallines à partir de polymères amorphes, **caractérisé par le fait que**
l'adhésif (7) comporte un composant polyuréthane.

9. Adhésif (7) durcissable à haute résistance et à élasticité permanente selon la revendication 8,
**caractérisé par le fait que**
l'adhésif (7) comporte moins de 5 % en poids de solvant, de préférence moins de 3 % en poids de solvant, de façon davantage préférée moins de 1 % en poids de solvant, et est, de façon particulièrement préférée, exempt de solvant.

10. Adhésif (7) durcissable à haute résistance et à élasticité permanente selon l'une des revendications 8 ou 9,
**caractérisé par le fait que**
l'adhésif (7) est ajusté par le choix et le rapport en poids du composant donnant du soufre et du composant polyuréthane de telle sorte que lesdits au moins deux mécanismes de durcissement différents sont aptes à être initiés à une température ambiante dans la plage de -50 à +80°C, de préférence de -30 à +70°C, de façon davantage préférée de -10 à +65°C, de façon particulièrement préférée de 0 à +60°C.

11. Adhésif (7) durcissable à haute résistance et à élasticité permanente selon l'une des revendications 8 à 10,
**caractérisé par le fait que**
l'adhésif (7) présente, à l'état durci, une résistance à la déchirure > 6 N/mm², de préférence > 8 N/mm², de préférence > 10 N/mm², de façon davantage préférée > 12 N/mm², de façon particulièrement préférée > 15 N/mm².

12. Adhésif (7) durcissable à haute résistance et à élasticité permanente selon l'une des revendications 8 à 11,
**caractérisé par le fait que**
l'adhésif (7) présente, à l'état durci, un module d'élasticité dans la plage de 0,2 - 40 N/mm², de préférence de 0,3 - 30 N/mm² et, de façon particulièrement préférée, de 0,4 - 20 N/mm².

13. Adhésif (7) durcissable à haute résistance et à élasticité permanente selon l'une des revendications 8 à 12,
**caractérisé par le fait que**
l'adhésif (7) présente, à l'état durci sur du caoutchouc SBR, une résistance au pelage > 4 N/mm, de préférence > 6 N/mm, de préférence > 8 N/mm, de façon davantage préférée > 10 N/mm, de façon particulièrement préférée > 12 N/mm.

14. Adhésif (7) durcissable à haute résistance et à élasticité permanente selon l'une des revendications 8 à 13,
**caractérisé par le fait que**
l'adhésif (7) présente, à l'état durci, une dureté Shore A dans la plage de 50 - 99 Shore, de préférence 55 - 95 Shore, de façon particulièrement préférée 60 - 90 Shore.
